# EUROPÄISCHE PATENTANMELDUNG

(11) **EP 4 258 397 A1**
(43) Veröffentlichungstag der Anmeldung: **11.10.2023**
(21) Anmeldenummer: 22166900.5
(22) Anmeldetag: 06.04.2022
(51) Int. Cl.: H01M 10/04, H01M 10/0587, H01M 50/107, H01M 50/128, H01M 50/119, H01M 50/528, H01M 50/533, H01M 50/536, H01M 10/052

(54) **ENERGIESPEICHERZELLE MIT ZYLINDRISCHEM GEHÄUSE UND VERFAHREN ZUR HERSTELLUNG**

(71) Anmelder: VARTA Microbattery GmbH, 73479 Ellwangen Jagst (DE)
(72) Erfinder: Elmer, Martin, 73479 Ellwangen (DE); Stock, Stefan, 73492 Rainau-Dalkingen (DE)
(74) Vertreter: Ostertag & Partner Patentanwälte mbB

(57) **Zusammenfassung**

Es werden eine Energiespeicherzelle (100; 300) mit einem zylindrischen, flüssigkeitsdicht verschlossenen Gehäuse mit einer ersten Gehäusestirnseite (140) und einer zweiten Gehäusestirnseite (150) und einem Gehäusemantel (200) sowie ein Verfahren zu ihrer Herstellung vorgeschlagen. Die zylindrische Energiespeicherzelle (100; 300) umfasst einen in dem Gehäuse angeordneten Elektroden-Separator-Verbund (104). Der Elektroden-Separator-Verbund (104) liegt in Form eines aus Elektrodenbändern (105, 108) und mindestens einem bandförmigen Separator (116, 117) gebildeten zylindrischen Wickels vor, der eine erste und eine zweite endständige Wickelstirnseite (120, 130) und einen Wickelmantel aufweist. Dabei ist der Elektroden-Separator-Verbund (104) in dem Gehäuse axial angeordnet, so dass die erste Wickelstirnseite (120) in Richtung der ersten Gehäusestirnseite (140) und die zweite Wickelstirnseite (130) in Richtung der zweiten Gehäusestirnseite (150) weist. Die Energiespeicherzelle ist dadurch gekennzeichnet, dass der Gehäusemantel (200) der Energiespeicherzelle aus einer spiralförmig gewickelten Folie, bevorzugt einer spiralförmig gewickelten Metallfolie, gebildet ist und mindestens zwei Lagen der Folie, bevorzugt der Metallfolie, umfasst.

## Beschreibung

### ANWENDUNGSGEBIET

Die vorliegende Erfindung betrifft eine zylindrische Energiespeicherzelle mit einem Elektroden-Separator-Verbund in Form eines Wickels sowie ein Verfahren zu deren Herstellung.

### STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherzellen heute sekundäre Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in Werkzeugen, werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 × 70 (Durchmesser mal Höhe in mm). Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene bzw. beschichtete bandförmige Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weisen die Zellen Blechteile auf, die flach auf den Stirnseiten des Wickels aufsitzen und mit den Längsrändern der Stromkollektoren durch Verschweißung verbunden sind. Dadurch ist es möglich, die Stromkollektoren und damit auch die dazugehörigen Elektroden über ihre gesamte Länge elektrisch zu kontaktieren. Zellen mit derart kontaktierten Wickeln weisen einen deutlich reduzierten Innenwiderstand auf. Das Auftreten großer Ströme kann in der Folge sehr viel besser abgefangen und auch Wärme kann besser aus dem Wickel abgeführt werden.

Elektrochemische Energiespeicherzellen weisen in der Regel ein metallisches Gehäuse auf. Das Gehäuse zylindrischer Rundzellen umfasst oftmals einen Gehäusebecher, der zur Aufnahme des gewickelten Elektroden-Separator-Verbunds dient, sowie ein Deckelbauteil, das die Öffnung des Gehäusebechers verschließt. Bei dem Gehäusebecher kann es sich beispielsweise um ein tiefgezogenes Bauteil, beispielsweise aus Aluminium oder aus vernickeltem Stahl oder Edelstahl, mit einer Wandstärke in einem Bereich zwischen 0,1 mm - 2 mm handeln.

Zwischen dem Deckelbauteil und dem Gehäusebecher ist meist eine Dichtung angeordnet, die zum einen der Abdichtung des Gehäuses dient, zum anderen aber auch die Funktion hat, das Deckelbauteil und den Gehäusebecher elektrisch voneinander zu isolieren. Die Dichtung wird zur Montage meist auf den Rand des Deckelbauteils aufgezogen. Zum Verschluss der Rundzellen kann beispielsweise der Öffnungsrand des Gehäusebechers radial nach innen über den von der Dichtung umschlossenen Rand des Deckelbauteils umgebogen sein (Bördelprozess), so dass das Deckelbauteil einschließlich der Dichtung in der Öffnung des Gehäusebechers formschlüssig fixiert ist.

Für die Montage der Zellen muss zunächst der Elektroden-Separator-Verbund hergestellt werden, bevor der Elektroden-Separator-Verbund in einem separaten Arbeitsschritt in das zylindrische und metallische Gehäuse eingesetzt wird, das anschließend verschlossen wird.

Im Fall von gewickelten Elektroden-Separator-Verbünden wird der Elektrodenwickel selbst zunächst auf einer Wickelmaschine hergestellt, anschließend zu einer separaten Montagelinie transportiert und in den Becher eingeführt.

Nachteilig bei dieser Vorgehensweise ist weiterhin, dass für das Einführen des Wickels in den Becher oftmals ein Freiraum bzw. ein gewisser Spielraum zwischen dem Außendurchmesser des Wickels und dem Innendurchmesser des Bechers vorhanden sein muss. Dieser Freiraum bleibt in der montierten Energiespeicherzelle in energetischer Hinsicht ungenutzt. Ebenso nachteilhaft für die Energiedichte der Zelle ist das relativ hohe Gewicht klassischer Gehäusebecher. Dieses kann bis zu 15 % des Gesamtgewichts einer Zelle ausmachen. Weiterhin sind klassische Gehäusebecher aus den genannten Metallen vergleichsweise teuer und im Falle von Stahl oft auch rostanfällig, insbesondere im Bereich herstellungsbedingter Schnittkanten. Weiterhin ist auch die Anlagentechnik zum Zuführen und Einbringen des Wickels in den Becher komplex und kostenintensiv.

### AUFGABE UND LÖSUNG

Vor diesem Hintergrund stellt sich die Erfindung die Aufgabe, eine verbesserte Energiespeicherzelle bereitzustellen, die eine optimale Ausnutzung ihres Volumens erlaubt. Gleichzeitig soll das Herstellungsverfahren für die Zelle vereinfacht werden, wodurch eine Kosteneinsparung bei der Herstellung der Zellen möglich wird.

Diese Aufgabe wird durch eine Energiespeicherzelle mit den Merkmalen des Anspruchs 1 gelöst. Weiterhin wird diese Aufgabe durch ein Herstellungsverfahren für eine solche Energiespeicherzelle gemäß dem weiteren unabhängigen Anspruch 15 gelöst. Vorteilhafte Ausführungsformen der Energiespeicherzelle sind Gegenstand der abhängigen Ansprüche.

Die erfindungsgemäße Energiespeicherzelle weist ein zylindrisches, flüssigkeitsdicht verschlossenes Gehäuse mit einer ersten Gehäusestirnseite und einer zweiten Gehäusestirnseite und einem Gehäusemantel auf. Dabei umfasst die Energiespeicherzelle die folgenden Merkmale:
a. Die zylindrische Energiespeicherzelle umfasst einen in dem Gehäuse angeordneten Elektroden-Separator-Verbund;
b. Der Elektroden-Separator-Verbund liegt in Form eines aus Elektrodenbändern und mindestens einem bandförmigen Separator, gebildeten zylindrischen Wickels vor, der eine erste und eine zweite endständige Wickelstirnseite und einen Wickelmantel aufweist;
c. Der Elektroden-Separator-Verbund ist in dem Gehäuse axial angeordnet, so dass die erste Wickelstirnseite in Richtung der ersten Gehäusestirnseite und die zweite Wickelstirnseite in Richtung der zweiten Gehäusestirnseite weist.

Kernaspekt der Erfindung ist das folgende Merkmal:
d. Der Gehäusemantel der Energiespeicherzelle ist aus mindestens einer spiralförmig gewickelten Folie, bevorzugt einer spiralförmig gewickelten Metallfolie, gebildet und umfasst mindestens zwei Lagen der Folie, bevorzugt der Metallfolie.

Die Elektrodenbänder umfassen vorzugsweise jeweils einen bandförmigen Stromkollektor und eine darauf angeordnete Beschichtung aus einem Elektrodenmaterial.

Bei der erfindungsgemäßen Energiespeicherzelle kann es sich insbesondere um eine zylindrische Rundzelle handeln. In anderen Ausführungsformen kann es sich auch um eine Knopfzelle handeln, wobei sich eine Knopfzelle von einer zylindrischen Rundzelle insbesondere dadurch unterscheidet, dass sie kleiner ist und bei einer Knopfzelle die Höhe der Zelle kleiner als ihr Durchmesser ist.

Gemäß dem erfindungsgemäßen Konzept verzichtet die erfindungsgemäße Energiespeicherzelle auf ein herkömmliches metallisches Gehäuse. Vielmehr zeichnet sich die erfindungsgemäße Energiespeicherzelle dadurch aus, dass der Gehäusemantel der Zelle von gewickelten Folienlagen, insbesondere Metallfolienlagen, gebildet wird. Dabei liegt die Folie, insbesondere die Metallfolie, mindestens doppellagig vor. Mit anderen Worten, der Gehäusemantel ist aus mindestens zwei Windungen der Folie, insbesondere der Metallfolie, gebildet.

### Gehäusemantel

Bevorzugt umfasst der Gehäusemantel 2 bis 50 Lagen der Folie. Besonders bevorzugt sind 2 bis 25 Lagen und ganz besonders bevorzugt 5 bis 25 Lagen.

Die Folie, insbesondere die gewickelte Metallfolie, weist bevorzugt eine Dicke im Bereich von 4 bis 300 µm, bevorzugt 4 bis 100 µm, auf. Besonders bevorzugt ist eine Dicke von 4 bis 50 µm, ganz besonders bevorzugt 4 bis 25 µm.

Die Anzahl der Lagen für den Gehäusemantel kann in Abhängigkeit von der Dicke der verwendeten Folie angepasst werden. Je dünner die Folie ist, desto mehr Lagen können gegebenenfalls vorgesehen sein. Dabei beeinflusst die Dicke der verwendeten Folie und die Anzahl der Lagen die Stärke und die Stabilität des resultierenden Gehäusemantels. Weiterhin kann auch die Größe bzw. der Formfaktor der Energiespeicherzelle bei der Wahl der Dicke der Folie und der Anzahl der Lagen eine Rolle spielen. Umso kleiner die Energiespeicherzelle ist, umso weniger Material kann ausreichend sein, um die erforderliche Stabilität des Gehäusemantels zu erreichen.

Die Ausbildung der Folie als Metallfolie kann aus vielen Gründen bevorzugt sein. So ist ein aus einer Metallfolie gebildeter Gehäusemantel beispielsweise meist ausreichend beständig gegenüber üblichen Flüssigelektrolyten, weist eine hohe mechanische Festigkeit auf und kann als Gehäusepol dienen. Darüber hinaus hat ein aus Metallfolie gebildeter Gehäusemantel den besonderen Vorteil, dass das metallische Material dem Gehäusemantel besonders gute wärmeableitende Eigenschaften verleiht.

In einigen Ausführungsformen kann es sich bei der zur Bildung des Gehäusemantels verwendeten Folie aber auch um eine Kunststofffolie handeln. Diese ist bevorzugt frei von Poren, die von einem Elektrolyten durchdrungen werden können, und weist bevorzugt elektrisch isolierende Eigenschaften auf. Besonders bevorzugt können faserverstärkte Kunststofffolien sein. Als Gehäusepol kann ein aus einer solchen Folie gebildeter Gehäusemantel nicht dienen. Es können entsprechend Poldurchführungen durch das Gehäuse zur Kontaktierung der Elektroden vorgesehen sein oder die Gehäusestirnseiten können beispielsweise metallisch ausgebildet sein und stehen elektrisch mit den Elektroden in Kontakt. Es ist auch möglich, zur Kontaktierung einer der Elektroden eine Poldurchführung vorzusehen und zur Kontaktierung der anderen Elektrode eine der Gehäusestirnseiten metallisch auszubilden und elektrisch mit der anderen Elektrode zu verbinden.

In anderen Ausführungsformen kann es vorgesehen sein, dass der Gehäusemantel der Zelle aus unterschiedlichen Folien gebildet ist, beispielsweise einer mehrlagigen Metallfolie, die auf den wickelförmigen Elektroden-Separator-Verbund gewickelt ist, und einer auf die metallischen Folienlagen aufgewickelten mehrlagigen Kunststofffolie, oder umgekehrt.

### Vorteile der Erfindung

Das erfindungsgemäße Konzept mit der Bildung des Gehäusemantels durch eine gewickelte Folie, insbesondere eine gewickelte Metallfolie, bietet verschiedene erhebliche Vorteile. Insbesondere wird für die erfindungsgemäße Energiespeicherzelle zur Ausbildung des Gehäuses kein separater metallischer Gehäusebecher benötigt, in den der Elektroden-Separator-Verbund in einem separaten Arbeitsschritt eingesetzt und der anschließend entsprechend kontaktiert, abgedichtet und verschlossen werden müsste. Vielmehr ist es durch das erfindungsgemäße Konzept möglich, die Montage bzw. den Zusammenbau der Energiespeicherzelle größtenteils auf einer Wickelmaschine durchzuführen, auf der bereits die Herstellung des Elektroden-Separator-Verbunds erfolgt. Bei dem erfindungsgemäßen Konzept kann daher auf eine separate Montagelinie zum Einsetzen des Elektroden-Separator-Verbunds und zum Zusammenbau des Gehäuses verzichtet werden.

Ein weiterer besonderer Vorteil des erfindungsgemäßen Konzepts liegt darin, dass der Innenraum der Energiespeicherzelle optimal genutzt werden kann. Der bereits erwähnte Freiraum zwischen dem Außendurchmesser des Wickels und dem Becherinnendurchmesser ist nicht erforderlich. Der Gehäusemantel wird unmittelbar auf den Elektroden-Separator-Verbund gewickelt, gegebenenfalls von diesem nur getrennt von einer dünnen, elektrisch isolierenden Schicht. Es ist kein Freiraum zwischen Wickel und zu bildenden Gehäusemantel vorgesehen. Somit kann das Innenvolumen der Zelle optimal für die Energiebereitstellung ausgenutzt werden.

Die Vermeidung eines Freiraums zwischen dem Wickelmantel und dem Gehäuse ist weiterhin im Hinblick auf eine optimale Kühlung der Zelle vorteilhaft. Bei herkömmlichen Zellen kann dieser in der Regel mit Luft gefüllte Freiraum eine thermische Isolationsschicht bilden, die eine Kühlung der Zellen erschwert.

Ein weiterer besonderer Vorteil des erfindungsgemäßen Konzepts liegt darin, dass gegebenenfalls auftretende Ungleichheiten im Wickeldurchmesser, die herstellungsbedingt durch den Beschichtungsprozess bei der Herstellung der Elektrodenbänder auftreten können, optimal ausgeglichen werden können. Wenn beispielsweise bereits die Beschichtung mit Elektrodenmaterial etwas ungleichmäßig ist, wird bei einer vorgegebenen Länge der aufgewickelten Elektrodenbänder der Wickel im Durchmesser etwas größer oder kleiner. Selbst kleine Schwankungen im Durchmesser können bereits zu Problemen bei dem Zusammenbau und zu Schwierigkeiten beim Einführen des Elektroden-Separator-Verbunds in den Gehäusebecher führen. Auch dieses Problem wird bei dem erfindungsgemäßen Konzept vollständig vermieden.

Weiterhin ergibt sich durch das erfindungsgemäße Konzept auch eine erhebliche Kosteneinsparung. Klassische tiefgezogene Gehäusebecher sind deutlich teurer als die Folie, insbesondere die Metallfolie, aus der der Gehäusemantel gemäß der Erfindung gebildet wird.

### Elektroden-Separator-Verbund

Der Elektroden-Separator-Verbund wird zunächst bevorzugt in an sich bekannter Weise hergestellt. Vorzugsweise werden hierfür zunächst die Elektrodenbänder, also insbesondere ein Elektrodenband für die Anode und ein Elektrodenband für die Kathode, sowie der mindestens eine bandförmige Separator, bereitgestellt. Innerhalb des Elektroden-Separator-Verbunds ist die Anordnung dieser Bänder beispielsweise folgendermaßen: Erstes Elektrodenband (z. B. Anode) - bandförmiger Separator - zweites Elektrodenband (z. B. Kathode) - bandförmiger Separator. In dem als Wickel ausgebildeten Elektroden-Separator-Verbund liegen die bandförmige Anode, die bandförmige Kathode und der oder die bandförmigen Separatoren spiralförmig aufgewickelt vor.

Zur Herstellung des Elektroden-Separator-Verbunds werden vorzugsweise die bandförmigen Elektroden gemeinsam mit dem mindestens einen bandförmigen Separator einer Wickelvorrichtung zugeführt und in dieser bevorzugt um eine Wickelachse, beispielsweise einem Wickeldorn, herum spiralförmig aufgewickelt.

In einigen Ausführungsformen werden die Elektroden und der mindestens eine Separator hierzu auf einen zylindrischen oder hohlzylindrischen Wickelkern aufgewickelt, der nach dem Wickeln im Wickel verbleibt. Hierfür kann beispielsweise zunächst ein erster bandförmiger Separator an dem Wickelkern befestigt werden, z. B. angeklebt oder angeschweißt. Die Elektrodenbänder und ein weiterer zwischen den Elektrodenbändern liegender bandförmiger Separator werden eingeführt und der Wickelprozess gestartet.

Alternativ kann der Wickel beispielsweise auch auf einem Wickeldorn gebildet werden, der nach Bildung des Wickels wieder aus dem Wickel gezogen wird.

Innerhalb des Elektroden-Separator-Verbunds sind die einzelnen Bänder nicht zwingend im Sinne einer Verklebung oder Laminierung fest miteinander verbunden, aber sie stehen in Kontakt miteinander, bevorzugt in einem Presskontakt.

Es ist auch möglich, dass aus den bandförmigen Elektroden zuerst ein bandförmiger Elektroden-Separator-Verbund gebildet wird, unter Anordnung eines bandförmigen Separators zwischen den Elektroden, und dieser Elektroden-Separator-Verbund dann zu dem Wickel verarbeitet wird.

Der Wickelmantel kann beispielsweise durch eine Kunststofffolie oder ein Klebeband gebildet sein. Es ist auch möglich, dass der Wickelmantel durch eine oder mehrere Windungen des bandförmigen Separators gebildet ist.

In besonders bevorzugten Ausgestaltungen zeichnet sich der Elektroden-Separator-Verbund der erfindungsgemäßen Energiespeicherzelle durch mindestens eines der folgenden Merkmale a. bis c. aus:
a. Eines der Elektrodenbänder des Elektroden-Separator-Verbunds ist ein Elektrodenband mit positiver Polarität, das einen bandförmigen Kathodenstromkollektor umfasst, der einen ersten Längsrand und einen dazu parallelen zweiten Längsrand aufweist und beidseitig mit einem positiven Elektrodenmaterial beschichtet ist;
b. Eines der Elektrodenbänder des Elektroden-Separator-Verbunds ist ein Elektrodenband mit negativer Polarität, das einen bandförmigen Anodenstromkollektor umfasst, der einen ersten Längsrand und einen dazu parallelen zweiten Längsrand aufweist und beidseitig mit einem negativen Elektrodenmaterial beschichtet ist;
c. Der mindestens eine bandförmige Separator isoliert die entgegengesetzt gepolten bandförmigen Elektrodenbänder elektrisch voneinander.

Vorzugsweise sind die vorgenannten Merkmale a. und b., und besonders bevorzugt die vorgenannten Merkmale a., b. und c. gemeinsam miteinander realisiert.

### Bevorzugte elektrochemische Ausführungsform

Bei der erfindungsgemäßen Energiespeicherzelle kann es sich in besonders bevorzugten Ausführungsformen um eine Lithium-Ionen-Zelle handeln, wobei für die Elektroden bzw. die Elektrodenbänder der Energiespeicherzelle prinzipiell sämtliche für Lithium-Ionen-Zellen, insbesondere für sämtliche sekundäre Lithium-Ionen-Zellen, bekannte Elektrodenmaterialien verwendet werden können.

In den negativen Elektroden können als Aktivmaterialien insbesondere Partikel auf Kohlenstoffbasis, wie z. B. graphitischer Kohlenstoff oder zur Interkalation von Lithium befähigte, nichtgraphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium sind in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Geeignet sind insbesondere Mischungen aus Silizium- und Kohlenstoff-basierten Speichermaterialien. Weiterhin eignen sich auch dünne Anoden aus metallischem Lithium.

Für die positiven Elektroden kommen als Aktivmaterialien beispielsweise Lithium-MetalloxidVerbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1,11}(Ni_{0,40}Mn_{0,39}Co_{0,16}Al_{0,05})_{0,89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen.

Leitmittel dienen dazu, die elektrische Leitfähigkeit der Elektroden zu erhöhen. Geeignete Elektrodenbinder basieren beispielsweise auf Polyvinylidenfluorid (PVDF), Lithium-Polyacrylat, Styrol-Butadien-Kautschuk oder Carboxymethylzellulose oder auch Mischungen unterschiedlicher Binder. Geeignete Leitmittel sind Ruß, feine Grafite, Kohlenstofffasern, Carbon-Nanotubes und Metallpulver.

Die erfindungsgemäße Energiespeicherzelle umfasst besonders bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Bevorzugt sind die Schichten aus dem positiven und dem negativen Elektrodenmaterial sowie der mindestens eine bandförmige Separator mit dem Elektrolyten getränkt.

Der mindestens eine Separator wird bevorzugt aus einer elektrisch isolierenden Kunststofffolie gebildet. Es weist bevorzugt Poren auf, so dass er von dem flüssigen Elektrolyten durchdrungen werden kann. Die Kunststofffolie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich 10 von 5 µm bis 50 µm aufweisen.

Es ist allerdings auch möglich, dass es sich bei dem bandförmigen Separator um einen Separator aus einem Festkörperelektrolyten, der eine intrinsische lonenleitfähigkeit aufweist und nicht mit einem flüssigen Elektrolyten getränkt werden muss, handelt. Bei dem Festkörperelektrolyt kann es sich beispielsweise um einen Polymerfestkörperelektrolyten basierend auf einem Polymer-Leitsalzkomplex, der einphasig ohne jegliche Flüssigkomponente vorliegt, handeln. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise Lithium-bis-(trifluoromethan)sulfonylimid (LiTFSI), Lithiumhexafluorophosphat (LiPF₆) und Lithiumtetrafluoroborat (LiBF₄) vorliegen.

### Nennkapazität

Die Nennkapazität einer als zylindrische Rundzelle ausgebildeten erfindungsgemäßen Energiespeicherzelle auf Lithium-Ionen-Basis beträgt bevorzugt bis zu 15000 mAh. Mit einem Formfaktor von 21 × 70 hat die Energiespeicherzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit einem Formfaktor von 18 × 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Energiespeicherzellen streng reglementiert. So haben etwa Angaben zur Nennkapazität von sekundären Nickel-Cadmium-Zellen auf Messungen gemäß den Normen IEC/EN 61951-1 und IEC/EN 60622, Angaben zur Nennkapazität von sekundären Nickel-Metallhydrid-Zellen auf Messungen gemäß der Norm IEC/EN 61951-2, Angaben zur Nennkapazität von sekundären Lithium-Zellen auf Messungen gemäß der Norm IEC/EN 61960 und Angaben zur Nennkapazität von sekundären Blei-Säure-Zellen auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Bevorzugte Ausführungsformen von Stromkollektoren / Separatoren

Das Anodenstromkollektorband, das Kathodenstromkollektorband und der mindestens eine bandförmige Separator der erfindungsgemäßen Zelle weisen bevorzugt die folgenden Dimensionen auf:
- Eine Länge im Bereich von 0,5 m bis 25 m;
- Eine Breite im Bereich 40 mm bis 145 mm.

Die Stromkollektoren der erfindungsgemäßen Energiespeicherzelle dienen dazu, im jeweiligen Elektrodenmaterial enthaltene elektrochemisch aktive Komponenten möglichst großflächig elektrisch zu kontaktieren. Insbesondere bestehen die bandförmigen Stromkollektoren aus einer Metallfolie oder sind zumindest oberflächlich metallisiert.

Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Im Hinblick auf die erfindungsgemäße Ausbildung des Gehäusemantels der Energiespeicherzelle mittels einer spiralförmig gewickelten Folie sind zwei Varianten besonders bevorzugt. Bei der ersten dieser Varianten wird der Gehäusemantel von einem endständigen Abschnitt eines der Stromkollektoren, der auch im Elektroden-Separator-Verbund enthalten ist, gebildet. Bei der zweiten Variante wird der Gehäusemantel von einer separaten Metallfolie gebildet.

### Bildung des Gehäusemantels aus endständigem Stromkollektorabschnitt

Gemäß der ersten Variante zeichnet sich die erfindungsgemäße Energiespeicherzelle durch mindestens eines der folgenden zusätzlichen Merkmale a. bis c. aus:
a. Bei der spiralförmig gewickelten Folie, die den Gehäusemantel der Energiespeicherzelle bildet, handelt es sich um einen spiralförmigen aufgewickelten endständigen Abschnitt des bandförmigen Kathodenstromkollektors, der nicht mit dem positiven Elektrodenmaterial beschichtet ist;
b. Bei der spiralförmig gewickelten Folie, die den Gehäusemantel der Energiespeicherzelle bildet, handelt es sich um einen spiralförmigen aufgewickelten endständigen Abschnitt des bandförmigen Anodenstromkollektors, der nicht mit dem negativen Elektrodenmaterial beschichtet ist;
c. Der bandförmige Kathodenstromkollektor und der bandförmige Anodenstromkollektor haben über ihre gesamte Länge eine im Wesentlichen konstante Breite.

Die vorgenannten Merkmale a. und b. sind dabei als Alternativen zu betrachten, so dass in dieser Variante der Gehäusemantel also entweder von der Metallfolie gebildet wird, die auch den Kathodenstromkollektor des Elektroden-Separator-Verbunds bildet oder von der Metallfolie gebildet wird, die auch den Anodenstromkollektor des Elektroden-Separator-Verbunds bildet.

In besonders bevorzugter Weise sind die vorgenannten Merkmale a. und c., oder b. und c. in Kombination miteinander verwirklicht.

In dem Fall, dass der Gehäusemantel von dem unbeschichteten Kathodenstromkollektorband gebildet wird, stellt sich der Aufbau des Elektroden-Separator-Verbunds vorzugsweise folgendermaßen dar: Von innen nach außen betrachtet endet zunächst das negative Elektrodenband einschließlich des Anodenstromkollektorbandes. In diesem Bereich läuft auch die beidseitige Beschichtung des Kathodenstromkollektors aus. Das Metallfolienband, das den Kathodenstromkollektor bildet, läuft jedoch noch weiter. Auch der oder die bandförmigen Separatoren werden beispielsweise noch für zwei oder drei Windungen weitergeführt. Dann enden auch der oder die bandförmigen Separatoren, so dass allein das unbeschichtete Kathodenstromkollektorband verbleibt. Das Kathodenstromkollektorband wird dann zur Ausbildung des Gehäusemantels in mehreren Windungen aufgewickelt.

In dem Fall, dass der Gehäusemantel von dem unbeschichteten Anodenstromkollektorband gebildet wird, stellt sich der Aufbau des Elektroden-Separator-Verbunds vorzugsweise folgendermaßen dar: Von innen nach außen betrachtet endet zunächst das positive Elektrodenband einschließlich des Kathodenstromkollektorbandes. In diesem Bereich läuft auch die Beschichtung des Anodenstromkollektors aus, der selbst aber mit dem oder den bandförmigen Separatoren beispielsweise für zwei oder drei Windungen weitergeführt wird. Dann enden auch die bandförmigen Separatoren, so dass der unbeschichtete Anodenstromkollektor verbleibt, der zur Ausbildung des Gehäusemantels in mehreren Windungen aufgewickelt wird.

### Bildung des Gehäusemantels aus separater Metallfolie

In der zweiten bevorzugten Variante der erfindungsgemäßen Energiespeicherzelle wird der Gehäusemantel von der separaten Metallfolie (Mantelmetallfolie) gebildet. Hierbei zeichnet sich die erfindungsgemäße Energiespeicherzelle durch mindestens eines der folgenden zusätzlichen Merkmale a. bis d. aus:
a. Bei der spiralförmig gewickelten Folie, die den Gehäusemantel der Energiespeicherzelle bildet, handelt es sich um ein spiralförmig aufgewickeltes Mantelmetallfolienband, das auf den Wickelmantel des Elektroden-Separator-Verbunds gewickelt ist;
b. Der Wickelmantel des Elektroden-Separator-Verbunds ist aus einem elektrisch isolierenden Material gebildet;
c. Das Mantelmetallfolienband hat über seine gesamte Länge eine im Wesentlichen konstante Breite;
d. Das Mantelmetallfolienband hat eine größere Breite als der bandförmige Kathodenstromkollektor und/oder der bandförmige Anodenstromkollektor des Elektroden-Separator-Verbunds.

In besonders bevorzugten Ausführungsformen sind die vorgenannten Merkmale a. und b., oder a. bis. c., oder a. bis d. in Kombination miteinander verwirklicht.

Bei dem elektrisch isolierenden Material gemäß dem vorgenannten Merkmal b. kann es sich insbesondere um Windungen des mindestens einen bandförmigen Separators handeln. Alternativ oder zusätzlich kann zur Ausbildung des Wickelmantels nach der Wicklung des Elektroden-Separator-Verbunds bzw. nach dem Ende der Elektrodenbänder und gegebenenfalls des mindestens einen bandförmigen Separators eine separate Klebefolie oder Ähnliches auf den Elektroden-Separator-Verbund aufgebracht werden.

Es kann vorteilhaft sein, wenn das Mantelmetallfolienband für den Gehäusemantel eine größere Breite als die bandförmigen Stromkollektoren des Elektroden-Separator-Verbunds hat, um die anschließende Verbindung zwischen dem Gehäusemantel und den Gehäusestirnseiten beispielsweise durch Verschweißung zu vereinfachen.

Es ist aber auch möglich, dass als das Metallfolienband das gleiche Metallband verwendet wird, das als Anodenstromkollektor oder als Kathodenstromkollektor Verwendung findet. So ist es möglich, nach dem Aufwickeln der Elektrodenbänder die Elektrodenbänder zu schneiden, den Wickelmantel durch Weiterwickeln des mindestens einen bandförmigen Separators zu bilden, dann das gleiche Metallband, das als Anodenstromkollektor oder als Kathodenstromkollektor in der Anode oder der Kathode Verwendung findet, zwischen zwei Windungen des Separators zu stecken und anschließend des Separator abzuschneiden, so dass nur das Metallband weitergewickelt wird.

### Materialwahl für Gehäusemantel

In besonders bevorzugten Ausgestaltungen der erfindungsgemäßen Energiespeicherzelle zeichnet sich die Energiespeicherzelle im Hinblick auf das Material der Folie für den Gehäusemantel durch eines der folgenden Merkmale a. bis c. aus:
a. Die spiralförmig gewickelte Metallfolie, die den Gehäusemantel der Energiespeicherzelle bildet, besteht aus Aluminium oder aus einer Aluminiumlegierung;
b. Die spiralförmig gewickelte Metallfolie, die den Gehäusemantel der Energiespeicherzelle bildet, besteht aus Kupfer oder Nickel oder aus einer Kupferlegierung oder aus einer Nickellegierung.
c. Die spiralförmig gewickelte Folie, die den Gehäusemantel der Energiespeicherzelle bildet, besteht aus Kunststoff.

Die vorgenannten Merkmale a. und b. und c. sind dabei im Allgemeinen als Alternativen zu verstehen. Prinzipiell ist es jedoch auch möglich, dass der Gehäusemantel von mehreren Metallfolien aus unterschiedlichem Material oder einer Metallfolie und einer Kunststofffolie gebildet wird.

Die Metallfolie aus Aluminium oder aus einer Aluminiumlegierung gemäß dem unmittelbar vorgenannten Merkmal a. kann in bevorzugter Weise ein endständiger Abschnitt des Kathodenstromkollektors (gemäß der obigen ersten bevorzugten Variante) sein. Die Metallfolie aus Kupfer oder Nickel oder aus einer Kupferlegierung oder aus einer Nickellegierung gemäß dem vorgenannten Merkmal b. kann in bevorzugter Weise ein endständiger Abschnitt des Anodenstromkollektors (gemäß der obigen ersten bevorzugten Variante) sein. In anderen Ausführungsformen können diese Metallfolien (gemäß der obigen zweiten bevorzugten Variante) separate Metallfolien sein, die getrennt von den Stromkollektorbändern vorliegen und gegebenenfalls eine andere Breite aufweisen.

Die Verwendung von Aluminium oder einer Aluminiumlegierung als Metallfolie für die Ausbildung des Gehäusemantels kann besonders bevorzugt sein, da es sich hierbei um das kostengünstigere Material im Vergleich zu Kuper oder Nickel handelt.

Die Verwendung von Kupfer oder Nickel oder einer Kupferlegierung oder einer Nickellegierung für die Metallfolie, die den Gehäusemantel bildet, kann allerdings besondere Vorteile bieten, da sich diese Materialien in der Regel sehr gut verschweißen lassen.

Wie oben ausgeführt, kann es sich bei der mindestens einen Folie in einigen Ausführungsformen auch um eine Kunststofffolie handeln. Ein mögliches Ausgangsmaterial wäre ein Polyetherketon.

### Klebeschicht

In besonders bevorzugten Ausführungsformen zeichnet sich die erfindungsgemäße Energiespeicherzelle durch das folgende zusätzliche Merkmal aus:
a. Die aus der mindestens einen Folie, insbesondere der Metallfolie, gebildeten Lagen, die den Gehäusemantel der Energiespeicherzelle bilden, sind durch eine Klebeschicht, die zwischen den Lagen der Folie, insbesondere der Metallfolie, angeordnet ist, miteinander verbunden.

Eine Verklebung der Lagen des Gehäusemantels kann besonders vorteilhaft sein, da hierdurch die Dichtigkeit des Gehäuses verbessert werden kann. Hierfür können übliche Flüssigkleber oder Schmelzkleber oder Ähnliches verwendet werden. Beispielsweise können Thermoplasten eingesetzt werden, die anschließend thermisch gehärtet werden. Es können auch geeignete Kunststoffe eingesiegelt werden, beispielsweise auf der Basis von Polyurethan oder Vergleichbarem.

Es können als Klebeschicht auch Klebebänder eingesetzt werden, deren beide Seiten eine Klebebindung zu den Lagen der Folie, insbesondere der Metallfolie, ausbilden können. Hierfür eignen sich beispielsweise beidseitig mit einem Klebstoff beschichtete Klebebänder oder Bänder, die intrinsische Klebeeigenschaften aufweisen.

Eine derartige Klebeschicht kann in bevorzugten Ausgestaltungen vor der Wicklung der mindestens einen Folie auf diese aufgesprüht oder aufgerakelt werden. So können beispielsweise die letzten Zentimeter eines in diesem Abschnitt unbeschichteten Stromkollektors, der für die Ausbildung des Gehäusemantels vorgesehen ist, mit einem Thermoplasten vorbeschichtet werden.

### Ausbildung der Gehäusestirnseiten

In einer besonders bevorzugten Ausführungsform der erfindungsgemäßen Energiespeicherzelle zeichnet sich die Zelle durch mindestens eines der folgenden zusätzlichen Merkmale a. bis d. aus:
a. Die erste Gehäusestirnseite der Energiespeicherzelle wird von einer runden, insbesondere kreisrunden, Metallscheibe oder einer metallischen Kappe, die einen runden, insbesondere kreisrunden, Boden und eine umlaufende Seitenwand umfasst, gebildet;
b. Die die erste Gehäusestirnseite bildende Metallscheibe oder Kappe ist durch Verschweißung mit dem Gehäusemantel verbunden;
c. Die zweite Gehäusestirnseite der Energiespeicherzelle wird von einer runden, insbesondere kreisrunden, Metallscheibe oder einer metallischen Kappe, die einen runden, insbesondere kreisrunden, Boden und eine umlaufende Seitenwand umfasst, gebildet;
d. Die die zweite Gehäusestirnseite bildende Metallscheibe oder Kappe ist durch Verschweißung mit dem Gehäusemantel verbunden.

In bevorzugten Ausgestaltungen sind die vorgenannten Merkmale a. und b., oder die vorgenannten Merkmale c. und d. in Kombination miteinander realisiert. Prinzipiell können auch beide Gehäusestirnseiten von einer runden Metallscheibe oder einer metallischen Kappe gebildet sein, so dass die vorgenannten Merkmale a. und c. oder, besonders bevorzugt, die vorgenannten Merkmale a. bis d. in Kombination miteinander verwirklicht sind.

Bei der umlaufenden Seitenwand der Kappe handelt es sich bevorzugt um einen nach innen ragenden Kragen oder einen Bund der Kappe. Bevorzugt steht die Seitenwand in einem Winkel von etwa 90° zu dem kreisförmigen Boden. Diese umlaufende Seitenwand kann die Montage und das Zusammenfügen der einzelnen Elemente der erfindungsgemäßen Energiespeicherzelle und die Anbindung des Gehäusemantels an die Gehäusestirnseiten erleichtern.

Die runde Form der Metallscheibe oder die runde Form des Bodens der Kappe zeichnet sich dadurch aus, dass die Form keine Ecken hat und dadurch gut in den Wickelprozess einzubinden ist. Besonders bevorzugt ist eine kreisrunde Form, die damit besonders gut an einen gleichmäßig gewickelten Elektroden-Separator-Verbund mit kreisrunder Grundfläche angepasst ist.

### Poldurchführung durch Gehäusestirnseite

In einer weiteren bevorzugten Ausbildung der erfindungsgemäßen Energiespeicherzelle zeichnet sich die Zelle durch mindestens eines der folgenden zusätzlichen Merkmale a. und b. aus:
a. Durch die erste und/oder durch die zweite Gehäusestirnseite ist ein elektrischer Kontaktpol geführt, der gegenüber der jeweiligen Gehäusestirnseite elektrisch isoliert ist und der mit einem der bandförmigen Stromkollektoren unmittelbar oder über einen metallischen Leiter elektrisch verbunden ist;
b. Einer der bandförmigen Stromkollektoren ist unmittelbar oder über einen metallischen Leiter elektrisch mit der die erste Gehäusestirnseite bildenden Metallscheibe oder Kappe oder mit der die zweite Gehäusestirnseite bildenden Metallscheibe oder Kappe elektrisch verbunden.

In einigen bevorzugten Ausführungsformen sind die vorgenannten Merkmale a. und b. in Kombination miteinander verwirklicht, wobei einer der Pole der Energiespeicherzelle, beispielsweise der Minuspol, von einem aus der einen Gehäusestirnseite herausragenden Kontaktpol und der andere Pol der Energiespeicherzelle, beispielsweise der Pluspol, von der gegenüberliegenden Gehäusestirnseite gebildet wird.

Bei dem Kontaktpol, der durch die eine der Stirnseiten geführt wird, kann es sich beispielsweise um einen hohlen Bolzen handeln, durch dessen Hohlraum geschweißt werden kann, so dass der Bolzen an einem darunterliegenden Bauteil befestigt werden kann. Anschließend kann die Öffnung des Bolzens verschlossen werden. Der Bolzen selbst ist zweckmäßigerweise gegenüber der übrigen Gehäusestirnseite elektrisch isoliert, beispielsweise durch eine Kunststoff-, Keramik- oder Glasdichtung. Für die Montage der Energiespeicherzelle ist es dabei besonders vorteilhaft, wenn eine die jeweilige Stirnseite der Energiespeicherzelle bildende Kappe oder Scheibe mit dem demgegenüber isolierten Bolzen ein vormontiertes Verschlussbauteil bilden, das als solches montiert werden kann.

### Unmittelbare Anbindung eines Stromkollektors an die Gehäusestirnseite

In besonders bevorzugten Ausführungsformen der erfindungsgemäßen Energiespeicherzelle zeichnet sich die Zelle durch mindestens eines der folgenden zusätzlichen Merkmale a. bis c. aus:
a. Der bandförmige Anodenstromkollektor umfasst einen Hauptbereich, der mit einer Schicht aus dem negativen Elektrodenmaterial beladen ist, sowie einen freien Randstreifen, der sich entlang seines ersten Längsrands erstreckt und der nicht mit dem negativen Elektrodenmaterial beladen ist;
b. Der bandförmige Kathodenstromkollektor umfasst einen Hauptbereich, der mit einer Schicht aus positivem Elektrodenmaterial beladen ist, sowie einen freien Randstreifen, der sich entlang seines ersten Längsrands erstreckt und der nicht mit dem positiven Elektrodenmaterial beladen ist;
c. Die Elektrodenbänder sind innerhalb des als Wickel ausgebildeten Elektroden-Separator-Verbunds derart angeordnet, dass
   - der erste Längsrand des Anodenstromkollektors oder der erste Längsrand des Kathodenstromkollektors aus einer der endständigen Wickelstirnseiten austritt,
   oder dass
   - der erste Längsrand des Kathodenstromkollektors aus der einen endständigen Wickelstirnseiten und der erste Längsrand des Anodenstromkollektors aus der anderen endständigen Wickelstirnseiten des Elektroden-Separator-Verbunds austreten.

Vorzugsweise sind die vorgenannten Merkmale a. und c., oder b. und c., oder, besonders bevorzugt, a., b. und c. in Kombination miteinander verwirklicht.

Bei der oben erwähnten Ausführungsform, bei der die bandförmigen Stromkollektoren unmittelbar mit der die erste Gehäusestirnseite bildenden Metallscheibe oder Kappe oder mit der die zweite Gehäusestirnseite bildenden Metallscheibe oder Kappe verbunden sind, ist besonders bevorzugt der aus einer der endständigen Wickelstirnseiten austretende erste Längsrand des Anodenstromkollektors oder der erste Längsrand des Kathodenstromkollektors unmittelbar mit der Metallscheibe oder Kappe verbunden, bevorzugt durch Verschweißung.

Die aus den jeweiligen Wickelstirnseiten herausragenden, von Elektrodenmaterial freien Randstreifen der Stromkollektoren erlauben eine besonders vorteilhafte Kontaktierung der Elektroden gemäß dem nachfolgenden, besonders bevorzugten Merkmal:
a. Der eine der bandförmigen Stromkollektoren ist unmittelbar mit der die erste Gehäusestirnseite bildenden Metallscheibe oder metallischen Kappe oder mit der die zweite Gehäusestirnseite bildenden Metallscheibe oder metallischen Kappe verbunden, wobei der erste Längsrand bzw. der freie Randstreifen des jeweiligen Stromkollektors unmittelbar auf der Metallscheibe oder dem Boden der Kappe aufsitzt und mit dieser oder diesem durch Verschweißung verbunden ist, bevorzugt über seine gesamte Länge.

Diese Form der unmittelbaren Kontaktierung der Stromkollektoren über ihre Längsränder erlaubt eine Kontaktierung der Elektroden über ihre gesamte Länge. Zellen mit einer solchen Kontaktierung der Elektroden zeichnen sich durch einen deutlich reduzierten Innenwiderstand aus, so dass große Ströme in der Folge wesentlich besser als bei einer herkömmlichen Kontaktierung der Elektroden abgefangen werden können und auch Wärme besser aus dem Wickel abgeführt werden kann.

Diese Art der Kontaktierung ist in einigen bevorzugten Ausführungsformen entweder nur für die Anode oder nur für die Kathode vorgesehen, vorzugsweise nur für die Kathode, wobei für die andere Elektrode, insbesondere für die Anode, beispielsweise eine Kontaktierung über einen Kontaktstreifen oder Ähnliches vorgesehen sein kann, wie es nachfolgend noch beschrieben ist.

### Elektrische Anbindung eines Stromkollektors über mindestens eine Kontaktfahne

In weiteren bevorzugten Ausgestaltungen der erfindungsgemäßen Energiespeicherzelle ist mindestens eines der folgenden zusätzlichen Merkmale a. und b. vorgesehen:
a. Mindestens einer der bandförmigen Stromkollektoren weist mindestens einen freien Abschnitt auf, der nicht mit dem Elektrodenmaterial beschichtet ist und an den ein metallischer Kontaktstreifen angeschweißt ist;
b. Der an den Stromkollektor geschweißte metallische Kontaktstreifen tritt aus einer der Wickelstirnseiten aus.

Vorzugsweise sind die vorgenannten Merkmale a. und b. in Kombination miteinander verwirklicht.

Der metallische Kontaktstreifen, der auch als Ableiterstreifen bezeichnet werden kann, erlaubt eine besonders einfache Kontaktierung der Elektroden. Vorzugsweise steht der metallische Kontaktstreifen senkrecht zur Wickel- bzw. Laufrichtung des Elektrodenbandes bzw. des bandförmigen Stromkollektors.

Die Kontaktierung eines der Elektrodenbänder über einen solchen Kontaktstreifen kann mit anderen Kontaktierungsmöglichkeiten kombiniert werden. Dabei kann es vorgesehen sein, dass eine der Elektroden über einen Kontaktstreifen und die andere Elektrode auf andere Weise, beispielsweise über eine direkte Anbindung eines Längsrandes eines der spiralförmig gewickelten Elektrodenbänder an ein stirnseitiges, plattenförmiges Metallblech, kontaktiert ist.

Die Kontaktstreifen sind vorzugsweise aus den gleichen Materialien gebildet wie der jeweilige Stromkollektor. Beispielsweise eignet sich als Kontaktstreifen für die Anode ein Kontaktstreifen aus Kupfer oder einer Kupferlegierung und als Kontaktstreifen für die Kathode ein Kontaktstreifen aus Aluminium oder aus einer Aluminiumlegierung.

In einer besonders bevorzugten Weiterbildung dieses Aspektes der Erfindung zeichnet sich die Energiespeicherzelle durch das folgende zusätzliche Merkmal a. aus:
a. Der an den Stromkollektor geschweißte metallische Kontaktstreifen ist unmittelbar mit der die erste Gehäusestirnseite bildenden Metallscheibe oder Kappe oder mit der die zweite Gehäusestirnseite bildenden Metallscheibe oder Kappe verbunden, bevorzugt durch Verschweißung.

Vorzugsweise ist nur einer der Stromkollektoren über einen metallischen Kontaktstreifen auf diese Weise mit der ersten oder der zweiten Gehäusestirnseite verbunden. Der Stromkollektor der entgegengesetzt gepolten Elektrode ist vorzugsweise auf andere Weise kontaktiert.

Bei der oben erwähnten Ausführungsform, bei der die bandförmigen Stromkollektoren über einen elektrischen Leiter mit der die erste Gehäusestirnseite bildenden Metallscheibe oder Kappe oder mit der die zweite Gehäusestirnseite bildenden Metallscheibe oder Kappe verbunden sind, handelt es sich bei dem elektrischen Leiter besonders bevorzugt um den Kontaktstreifen. Der Kontaktstreifen kann unmittelbar an die Metallscheibe oder Kappe geschweißt sein.

Die Wickelstirnseite, aus der der Kontaktstreifen oder auch einer der Längsränder der Stromkollektoren austritt, wird von mindestens einem Längsrand des mindestens einen bandförmigen Separators gebildet, die im Wickel stirnseitig etwas über die Beschichtung der Elektrodenbänder hinausragen.

### Gezielte Umformung des Längsrands der Stromkollektoren

In besonders bevorzugten Ausführungsformen zeichnet sich die erfindungsgemäße Energiespeicherzelle durch mindestens eines der folgenden zusätzlichen Merkmale a. und b. aus:
a. Der erste Längsrand des Anodenstromkollektors und/oder der erste Längsrand des Kathodenstromkollektors tritt aus einer der endständigen Wickelstirnseiten aus und weist einen spiralförmigen Verlauf auf;
b. Mindestens die äußere Windung des ersten Längsrands ist in Richtung einer zentralen Achse des Elektroden-Separator-Verbunds oder in Richtung weg von der zentralen Achse umgebogen.

Vorzugsweise sind die vorgenannten Merkmale a. und b. in Kombination miteinander verwirklicht.

Ein Umbiegen der an einem oder beiden Wickelstirnseiten herausragenden ersten Längsrands der Stromkollektoren ist insbesondere im Rahmen der Montage der erfindungsgemäßen Energiespeicherzelle besonders vorteilhaft, da auf diese Weise eine stirnseitige Kappe oder eine stirnseitige Scheibe besonders gut und effizient an der jeweiligen Wickelstirnseite anzubringen ist.

### Metallisches Kontaktelement

In ganz besonders bevorzugten Ausführungsformen der erfindungsgemäßen Energiespeicherzelle zeichnet sich die Zelle durch mindestens eines der folgenden zusätzlichen Merkmale a. bis e. aus:
a. Die Energiespeicherzelle umfasst mindestens ein metallisches Kontaktelement, gegebenenfalls einschließlich eines an dem Kontaktelement fixierten separaten elektrischen Leiters, das mit dem ersten Längsrand des Kathodenstromkollektors oder des Anodenstromkollektors durch Verschweißung verbunden ist, in einigen bevorzugten Ausführungsformen über dessen gesamte Länge, und über das dieser Stromkollektor elektrisch mit der die erste Gehäusestirnseite bildenden Metallscheibe oder Kappe oder mit der die zweite Gehäusestirnseite bildenden Metallscheibe oder Kappe elektrisch verbunden ist;
b. Das Kontaktelement sitzt flach auf dem ersten Längsrand des Kathodenstromkollektors oder des Anodenstromkollektors auf;
c. Das Kontaktelement umfasst ein erstes Element, das flach auf dem ersten Längsrand des aus der ersten oder der zweiten endständigen Stirnseite austretenden Stromkollektors aufsitzt und sich parallel zur jeweiligen Wickelstirnseite erstreckt, und umfasst ein zweites Element, das sich abgewinkelt an das erste Element anschließt und über den das erste Element elektrisch mit der die erste Gehäusestirnseite bildenden Metallscheibe oder Kappe oder mit der die zweite Gehäusestirnseite bildenden Metallscheibe oder Kappe verbunden ist;
d. Das Kontaktelement ist unmittelbar mit der die erste Gehäusestirnseite bildenden Metallscheibe oder Kappe oder mit der die zweite Gehäusestirnseite bildenden Metallscheibe oder Kappe verbunden, insbesondere durch Verschweißung;
e. Das Kontaktelement steht unmittelbar oder über einen elektrischen Leiter mit einem durch die erste und/oder durch die zweite Gehäusestirnseite geführten elektrischen Kontaktpol in Kontakt.

In besonders bevorzugten Ausgestaltungen sind die vorgenannten Merkmale a. und b., oder a. und b. und c., oder a. und b. und c. und d., oder die Merkmale a. bis e. in Kombination miteinander verwirklicht.

Insbesondere ist es bevorzugt, wenn ein solches Kontaktelement auf dem ersten Längsrand des Anodenstromkollektors aufsitzt.

Bei dem Kontaktelement handelt es sich bevorzugt um ein Blechbauteil, beispielsweise in Form einer Kappe oder Scheibe oder in Form eines Streifens. Das Blechbauteil weist bevorzugt eine Dicke im Bereich von 0,05 bis 1,0 mm auf.

Bei dem Kontaktelement kann es sich weiterhin auch um ein sternförmig ausgebildetes Blechbauteil handeln.

Bevorzugt umfasst die Energiespeicherzelle ein Isolierelement, das das Kontaktelement gegenüber einer die Gehäusestirnseite bildenden Metallscheibe oder Kappe elektrisch isoliert, indem es einen unmittelbaren Kontakt des Kontaktelements mit der Metallscheibe oder der Kappe unterbindet. In dieser Ausführungsform ist dabei besonders bevorzugt ein Kontaktpol gemäß dem vorgenannten Merkmal e. vorgesehen, wodurch der elektrische Kontakt nach außen geführt wird. Der Kontaktpol, beispielsweise ein üblicher Kontaktbolzen, kontaktiert dabei das Kontaktelement, das wiederum in elektrischem Kontakt mit derjeweiligen Elektrode steht.

Diese Realisierung der elektrischen Kontaktierung mit einem Kontaktpol kann insbesondere für die anodische Seite vorgesehen sein, wohingegen das vorgenannte Merkmal d. beispielsweise bei der kathodischen Seite der Energiespeicherzelle vorgesehen sein kann.

Alternativ kann in einer bevorzugten Ausführungsform beispielsweise bei der kathodischen Seite auf ein Kontaktelement verzichtet werden, so dass die Gehäusestirnseite auf der kathodischen Seite beispielsweise von einer Metallscheibe oder einer metallischen Kappe gebildet wird, die unmittelbar mit dem aus dieser Seite des Wickels heraustretenden freien Randstreifen des Kathodenstromkollektors kontaktiert ist. Alternativ kann eine elektrische Anbindung auch über einen oben beschriebenen metallischen Kontaktstreifen erfolgen.

Es gibt zwei bevorzugte Varianten (Variante A und Variante B), um das Kontaktelement, das bevorzugt mit dem ersten Längsrand bzw. dem freien Randstreifen des aus der ersten endständigen Wickelstirnseite austretenden Stromkollektors durch Verschweißung verbunden ist, elektrisch mit der die Gehäusestirnseite bildenden Metallscheibe oder metallischen Kappe, die jeweils auch als Deckelbauteil zu bezeichnen sind, zu verbinden.

Gemäß der Variante A zeichnet sich die erfindungsgemäße Zelle durch mindestens eines der unmittelbar folgenden Merkmale a. bis c. aus:
a. Das Kontaktelement ist unmittelbar mit dem Deckelbauteil verbunden.
b. Das Kontaktelement umfasst ein erstes Element bzw. einen ersten Abschnitt, der flach auf dem ersten Längsrand des aus der endständigen Wickelstirnseite austretenden Stromkollektors aufsitzt und sich parallel zur Wickelstirnseite erstreckt.
c. Das Kontaktelement umfasst ein zweites Element bzw. einen zweiten Abschnitt, der sich abgewinkelt an den ersten Abschnitt anschließt und über den der erste Abschnitt elektrisch mit dem Deckelbauteil verbunden ist.

Es ist bevorzugt, dass die unmittelbar vorstehenden Merkmale a. und b. in Kombination realisiert sind. Besonders bevorzugt sind die unmittelbar vorstehenden Merkmale a. bis c. in Kombination realisiert.

Gemäß der Variante B zeichnet sich die erfindungsgemäße Zelle durch mindestens eines der unmittelbar folgenden Merkmale a. und b. aus:
a. Das Kontaktelement ist über den separaten elektrischen Leiter mit dem Deckelbauteil verbunden.
b. Das Kontaktelement sitzt flach auf dem ersten Längsrand des aus der endständigen Wickelstirnseite austretenden Stromkollektors auf.

Es ist bevorzugt, dass die unmittelbar vorstehenden Merkmale a. und b. in Kombination realisiert sind.

Wenn der separate elektrische Leiter zum Einsatz kommt, besteht er bevorzugt aus dem gleichen Material wie das Kontaktelement selbst.

Natürlich ist nicht nur der erste Längsrand des aus der einen endständigen Wickelstirnseite austretenden Stromkollektors elektrisch zu kontaktieren. Vielmehr muss auch der erste Längsrand des aus der anderen endständigen Wickelstirnseite austretenden Stromkollektors elektrisch kontaktiert werden. Erfindungsgemäß bevorzugt sind die folgenden zwei Varianten C und D:
Gemäß der Variante C zeichnet sich die erfindungsgemäße Zelle durch das unmittelbar folgende Merkmal a. aus:
   a. Der erste Längsrand des aus der anderen endständigen Wickelstirnseite austretenden Stromkollektors sitzt unmittelbar auf einer Metallscheibe oder Kappe auf, die diese Gehäusestirnseite bildet, und ist mit dieser durch Verschweißung verbunden.
Gemäß der Variante D zeichnet sich die erfindungsgemäße Zelle durch das unmittelbar folgende Merkmal b. aus:
   b. Die Energiespeicherzelle umfasst ein Kontaktelement, das mit dem ersten Längsrand des aus der anderen endständigen Wickelstirnseite austretenden Stromkollektors durch Verschweißung verbunden ist und über das dieser Stromkollektor elektrisch mit einer Metallscheibe oder metallischen Kappe, die diese Gehäusestirnseite bildet, verbunden ist.

In beiden Fällen kann der Längsrand des aus der anderen endständigen Wickelstirnseite austretenden Stromkollektors über seine gesamte Länge elektrisch und/oder thermisch angebunden werden, wie im Fall des aus der gegenüberliegenden endständigen Wickelstirnseite austretenden Stromkollektors.

Besonders bevorzugt zeichnet sich die erfindungsgemäße Energiespeicherzelle durch das folgende Merkmal a. aus:
a. Der aus der ersten endständigen Wickelstirnseite austretende Stromkollektor ist der Anodenstromkollektor und der aus der zweiten Wickelstirnseite austretende Stromkollektor ist der Kathodenstromkollektor.

Diese Konfiguration ist insbesondere dann von Vorteil, wenn die Folie, die den Gehäusemantel bildet, aus Aluminium oder einer aluminiumhaltigen Legierung besteht, da auch der Kathodenstromkollektor bevorzugt aus Aluminium besteht.

In einer besonders bevorzugten Weiterbildung der Erfindung zeichnet sich das mit dem Anodenstromkollektor elektrisch verbundene Kontaktelement durch mindestens eines der unmittelbar folgenden Merkmale a. und b. aus:
a. Das Kontaktelement besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktelement besteht aus dem gleichen Material wie der Anodenstromkollektor.

Es ist bevorzugt, dass die unmittelbar vorstehenden Merkmale a. und b. in Kombination realisiert sind.

Besonders bevorzugt ist Kupfer als Material für das Kontaktelement, das mit dem Anodenstromkollektor verbunden ist.

In Ausführungsformen, in denen auch der Kathodenstromkollektor über ein Kontaktelement elektrisch angebunden wird, zeichnet sich dieses Kontaktelement durch mindestens eines der unmittelbar folgenden Merkmale a. und b. aus:
a. Das Kontaktelement besteht aus Aluminium oder einer Aluminiumlegierung.
b. Das Kontaktelement besteht aus dem gleichen Material wie der Kathodenstromkollektor.

Es ist bevorzugt, dass die unmittelbar vorstehenden Merkmale a. und b. in Kombination realisiert sind.

Besonders bevorzugt ist Aluminium als Material für das Kontaktelement, das mit dem Kathodenstromkollektor verbunden ist.

Besonders bevorzugt zeichnen sich erfindungsgemäß zur Kontaktierung der Längsränder der Stromkollektoren verwendbare Kontaktelemente durch mindestens eines der unmittelbar folgenden Merkmale a. bis g. aus:
a. Sie weisen eine bevorzugt gleichmäßige Dicke im Bereich von 50 µm bis 600 µm, bevorzugt im Bereich von 150 µm bis 350 µm, auf.
b. Sie weisen zwei sich gegenüberliegenden Flachseiten auf und erstrecken sich im Wesentlichen nur in einer Dimension.
c. Sie sind als Scheibe oder als polygonale Platte oder sternförmig ausgebildet oder umfassen eine solche Scheibe oder Platte.
d. Sie sind derart dimensioniert, dass sie mindestens 40 %, bevorzugt mindestens 60 %, besonders bevorzugt mindestens 70 % der ersten endständigen und/oder der zweiten endständigen Wickelstirnseite abdecken.
e. Sie weisen mindestens eine Durchbrechung, insbesondere mindestens ein Loch und oder mindestens einen Schlitz, auf.
f. Sie weisen mindestens eine Sicke auf, die auf einer Flachseite des Kontaktelements als längliche Vertiefung und auf der gegenüberliegenden Flachseite als längliche Erhöhung ausgebildet ist, wobei sie mit der Flachseite, welche die längliche Erhöhung trägt, auf dem ersten Längsrand des jeweiligen Stromkollektors aufsitzen.
g. Sie sind im Bereich der Sicke mit dem ersten Längsrand des jeweiligen Stromkollektors verschweißt, insbesondere über eine oder mehrere in der Sicke angeordnete Schweißnähte.

Es ist besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g. realisiert. Besonders bevorzugt sind alle Merkmale a. bis g. in Kombination miteinander realisiert.

Die möglichst großflächige Abdeckung der Wickelstirnseite ist für das thermische Management der erfindungsgemäßen Energiespeicherzelle von Bedeutung. Je größer die Abdeckung ist, desto eher ist es möglich, den ersten Längsrand des jeweiligen Stromkollektors möglichst über seine gesamte Länge zu kontaktieren. Die in dem Elektroden-Separator-Verbund gebildete Wärme kann so gut über das oder die Kontaktelemente abgeführt werden.

### Stromkollektorvorbehandlung

Es hat sich in einigen Ausführungsformen als vorteilhaft erwiesen, den Längsrand eines Stromkollektors einer Vorbehandlung zu unterziehen, bevor ein Kontaktelement aufgesetzt wird. Insbesondere kann in den Längsrand mindestens eine Vertiefung eingefalzt werden, die zu der gegebenenfalls vorgesehenen mindestens einen Sicke bzw. der länglichen Erhöhung auf der entsprechenden Flachseite des Kontaktelements korrespondiert. Dies gilt auch im Hinblick auf die Anbringung einer Metallscheibe oder Kappe, die eine Gehäusestirnseite bildet und die gegebenenfalls unmittelbar mit der jeweiligen Wickelstirnseite kontaktiert wird. Auch diese Metallscheibe oder Kappe kann mit einer oder mehreren Sicken versehen sein, die die Kontaktierung mit den Stromkollektorrändern erleichtern können.

Die Längsränder der Stromkollektoren können auch durch eine Vorbehandlung einer gerichteten Umformung unterzogen worden sein. Beispielsweise können sie in eine definierte Richtung umgebogen sein, insbesondere in Richtung einer zentralen Achse des Elektroden-Separator-Verbunds, wie oben bereits im Zusammenhang mit der Kontaktierung der Metallscheibe oder Kappe beschrieben wurde.

Die mindestens eine Durchbrechung in den Kontaktelementen kann mit besonderem Vorteil genutzt werden, um den Elektroden-Separator-Verbund im Rahmen der Montage der Energiespeicherzelle mit einem Elektrolyten tränken zu können. Diese Öffnung kann anschließend beispielsweise durch eine Blindniet verschlossen werden.

### Bevorzugte Merkmalskombinationen

In einer besonders bevorzugten Ausführungsform der erfindungsgemäßen Energiespeicherzelle zeichnet sich die Zelle durch mindestens eines der folgenden Merkmale a. bis f. aus, vorzugsweise durch eine Kombination der folgenden Merkmale a. bis f.:
a. Bei der spiralförmig gewickelten Folie, die den Gehäusemantel der Energiespeicherzelle bildet, handelt es sich um einen spiralförmigen aufgewickelten endständigen Abschnitt des bandförmigen Kathodenstromkollektors, der nicht mit dem positiven Elektrodenmaterial beschichtet ist, oder um einen spiralförmigen aufgewickelten endständigen Abschnitt des bandförmigen Kathodenstromkollektors, der nicht mit dem positiven Elektrodenmaterial beschichtet ist;
b. Die erste Gehäusestirnseite der Energiespeicherzelle wird von einer metallischen Kappe, die einen runden, insbesondere kreisrunden, Boden und eine umlaufende Seitenwand umfasst, gebildet, wobei die Kappe einen Öffnungsrand aufweist, der die umlaufende Seitenwand begrenzt;
c. Der Öffnungsrand der die erste Gehäusestirnseite bildenden Kappe ist durch Verschweißung mit dem Gehäusemantel verbunden;
d. Die zweite Gehäusestirnseite der Energiespeicherzelle wird von einer metallischen Kappe, die einen runden, insbesondere kreisrunden, Boden und eine umlaufende Seitenwand umfasst, gebildet;
e. Die spiralförmig gewickelte Folie liegt von außen an der Seitenwand der die zweite Gehäusestirnseite bildenden Kappe an;
f. Die spiralförmig gewickelte Folie ist durch eine umlaufende Schweißnaht mit der Seitenwand der die zweite Gehäusestirnseite bildenden Kappe verbunden.

Diese Ausführungsform der erfindungsgemäßen Energiespeicherzelle gemäß den vorgenannten Merkmalen a. bis f. zeichnet sich also insbesondere dadurch aus, dass der Gehäusemantel von einem endständigen Abschnitt eines der Stromkollektoren gebildet wird, der um den Elektroden-Separator-Verbund gewickelt ist. Vorzugsweise handelt es sich hierbei um den Kathodenstromkollektor, der aus Aluminium oder einer Aluminiumlegierung gebildet ist.

Hierbei kann es bevorzugt vorgesehen sein, dass die erste Gehäusestirnseite den Minuspol der Zelle, also die anodische Seite, und die zweite Gehäusestirnseite den Pluspol, also die kathodische Seite der Zelle bildet.

Mit besonderem Vorteil kann es dabei vorgesehen sein, dass zusätzlich zu den vorgenannten Merkmalen a. bis f. die erste Gehäusestirnseite zusätzlich ein Kontaktelement umfasst. Dieses Kontaktelement ist vorzugsweise unmittelbar mit den freien Randbereichen des an dieser Seite des Wickels herausragenden Anodenstromkollektors elektrisch kontaktiert. Vorzugsweise ist weiterhin das Kontaktelement gegenüber der diese erste Gehäusestirnseite bildenden Kappe elektrisch isoliert. Zusätzlich ist vorzugsweise eine Poldurchführung an dieser Gehäusestirnseite vorgesehen, die den elektrischen Kontakt, also den Minuspol, an dieser Stirnseite der Zelle nach außen führt.

In einer anderen bevorzugten Ausführungsform der erfindungsgemäßen Energiespeicherzelle zeichnet sich die Zelle durch mindestens eines der folgenden Merkmale a. bis f. aus, wobei bevorzugt eine Kombination dieser folgenden Merkmale a. bis f. vorgesehen ist:
a. Bei der spiralförmig gewickelten Folie, die den Gehäusemantel der Energiespeicherzelle bildet, handelt es sich um ein spiralförmig aufgewickeltes Mantelfolienband, insbesondere ein Mantelmetallfolienband, das auf den Wickelmantel des Elektroden-Separator-Verbunds gewickelt ist;
b. Die erste Gehäusestirnseite der Energiespeicherzelle wird von einer metallischen Scheibe gebildet, wobei die Scheibe einen Begrenzungsrand aufweist;
c. Der Begrenzungsrand der die erste Gehäusestirnseite bildenden Scheibe ist durch Verschweißung mit dem Gehäusemantel verbunden;
d. Die zweite Gehäusestirnseite der Energiespeicherzelle wird von einer metallischen Kappe, die einen runden, insbesondere kreisrunden, Boden und eine umlaufende Seitenwand umfasst, gebildet;
e. Die spiralförmig gewickelte Folie liegt von außen an der Seitenwand der die zweite Gehäusestirnseite bildenden Kappe an;
f. Die spiralförmig gewickelte Folie ist durch eine umlaufende Schweißnaht mit der Seitenwand der die zweite Gehäusestirnseite bildenden Kappe verbunden.

Im Unterschied zu der vorherigen Ausführungsform zeichnet sich eine Energiespeicherzelle gemäß dieser bevorzugten Ausführungsform dadurch aus, dass nicht einer der Stromkollektoren den Gehäusemantel bildet, sondern dass hierfür ein separates Mantelfolienband, insbesondere ein Mantelmetallfolienband, vorgesehen ist, dass auf den Wickelmantel des Elektroden-Separator-Verbunds gewickelt wird. Dieses Mantelfolienband kann eine etwas größere Breite als die Elektrodenbänder und die bandförmigen Separatoren des Elektroden-Separator-Verbunds haben, so dass der gewickelte Gehäusemantel eine größere Höhe als der Wickel hat. Entsprechend können die Gehäusestirnseiten ausgebildet sein, indem insbesondere im Bereich der ersten Gehäusestirnseite keine metallische Kappe, sondern eine metallische Scheibe vorgesehen ist. Hiermit kann in besonders vorteilhafter Weise ein bündiger Abschluss der ersten Gehäusestirnseite realisiert werden. Im Übrigen kann diese Ausführungsform der Energiespeicherzelle vergleichbar mit der zuvor beschriebenen Ausführungsform der Energiespeicherzelle ausgebildet sein.

Es kann weiterhin auch bevorzugt sein, dass das Folienband, insbesondere das Metallfolienband, dicker ausgebildet ist als die Stromkollektoren der Elektrodenbänder. Es werden dann weniger Windungen benötigt um den Gehäusemantel zu bilden.

In bevorzugten Ausführungsformen der erfindungsgemäßen Energiespeicherzelle ist zweckmäßigerweise ein Isolierelement zumindest im Bereich einer der Stirnseiten der Zelle vorgesehen. Das Isolierelement kann insbesondere die Metallscheibe oder die Kappe, die die erste Gehäusestirnseite bildet, gegenüber einem in diesem Bereich vorgesehenen Kontaktelement und dem oberen Bereich des Wickels in diesem Bereich der Zelle elektrisch isolieren.

### Isolierelement

Das Isolierelement kann folgendermaßen realisiert sein, wobei in einer ersten Ausführungsform sich die erfindungsgemäße Energiespeicherzelle durch mindestens eines der folgenden Merkmale a. bis c. auszeichnet:
a. Das mindestens eine Isolierelement ist oder umfasst ein Isolierband, das auf die Kante, welche die Wickelstirnseite begrenzt, aufgebracht ist und diese vor einem unmittelbaren Kontakt mit der Innenseite der Gehäusestirnseite und/oder des Gehäusemantels schützt.
b. Das mindestens eine Isolierelement ist oder umfasst ringförmiges Formteil aus Kunststoff mit bevorzugt L-förmigem Querschnitt, das auf die Kante, welche die Wickelstirnseite begrenzt, aufgebracht ist und diese vor einem unmittelbaren Kontakt mit der Innenseite der Gehäusestirnseite und/oder des Gehäusemantels schützt.
c. Das Isolierband oder das ringförmige Formteil aus Kunststoff weist eine Dicke im Bereich von 10 µm bis 200 µm auf.

Es ist bevorzugt, dass die unmittelbar vorstehenden Merkmale a. und c., oder b. und c. in Kombination miteinander realisiert sind.

Bei dem Isolierband kann es sich beispielsweise um ein Kapton/Polyimid-Klebeband handeln.

Das ringförmige Formteil aus Kunststoff mit bevorzugt L-förmigem Querschnitt kann beispielsweise durch Spritzguss gefertigt sein und auf die zu schützende Kante aufgeschoben werden. Es kann beispielsweise aus Teflon oder aus Polyamid bestehen.

In einer weiteren bevorzugten Ausbildung dieses Aspektes der Erfindung zeichnet sich die erfindungsgemäße Energiespeicherzelle durch mindestens eines der unmittelbar folgenden Merkmale a. und b. aus:
a. Das mindestens eine Isolierelement ist oder umfasst eine elektrisch isolierende Kunststoffbeschichtung, die einen Rand des Kontaktelements umschließt.
b. Die elektrisch isolierende Beschichtung ist durch Umspritzen des Randes des Kontaktelements gebildet.

Es ist bevorzugt, dass die unmittelbar vorstehenden Merkmale a. und b. in Kombination realisiert sind.

Zum Umspritzen des Randes des Kontaktelements eignen sich im Grunde alle thermoplastischen Kunststoffe mit elektrisch isolierenden Eigenschaften. Geeignet ist beispielsweise Polyamid.

Gegebenenfalls kann auch eine Kombination dieser Ausgestaltungen des Isolierelements vorgesehen sein, wobei ein Isolierband oder ringförmiges Formteil aus Kunststoff zusätzlich zu einer Kunststoffbeschichtung des Randes des Kontaktelements realisiert ist.

### Erfindungsgemäßes Verfahren

Die Erfindung umfasst weiterhin ein Verfahren zur Herstellung einer Energiespeicherzelle mit einem zylindrischen, flüssigkeitsdicht verschlossenen Gehäuse mit einer ersten Gehäusestirnseite und einer zweiten Gehäusestirnseite und einem Gehäusemantel gemäß der obigen Beschreibung. Bei diesem Verfahren sind die folgenden Schritte umfasst:
a. Es wird ein Elektroden-Separator-Verbund in Form eines Wickels mit zwei endständigen Wickelstirnseiten und einem Wickelmantel auf einer Wickelmaschine hergestellt, wobei der Elektroden-Separator-Verbund aus Elektrodenbändern gebildet wird, insbesondere gewickelt wird, zwischen denen mindestens ein bandförmiger Separator angeordnet wird, wobei vorzugsweise die Elektrodenbänder jeweils einen bandförmigen Stromkollektor umfassen, der mit Elektrodenmaterial beschichtet ist;
b. Der Gehäusemantel wird durch Wicklung aus einer Folie, insbesondere aus einer Metallfolie, gebildet.

Der Gehäusemantel der Energiespeicherzelle wird besonders bevorzugt gebildet, indem die Folie, insbesondere die Metallfolie, spiralförmig um den Elektroden-Separator-Verbund gewickelt wird, insbesondere derart, dass er mindestens zwei Lagen aus der Folie, insbesondere der Metallfolie, umfasst.

Die Stromkollektoren sind bevorzugt beidseitig mit Elektrodenmaterial beschichtet.

Die Herstellung des Elektroden-Separator-Verbunds erfolgt bevorzugt in herkömmlicher Weise auf einer Wickelmaschine. Der entscheidende Unterschied zu herkömmlichen Herstellungsverfahren für Energiespeicherzellen mit einem gewickelten Elektroden-Separator-Verbund liegt in der Bildung des Gehäusemantels. Erfindungsgemäß wird der Gehäusemantel durch die Wicklung von mindestens zwei Lagen der Folie, insbesondere der Metallfolie, auf dem Wickelmantel des Elektroden-Separator-Verbunds gebildet. Die hiermit verbundenen Vorteile, zum einen im Hinblick auf die optimale Ausnutzung des Innenvolumens der Energiespeicherzelle und zum anderen vor allem in dem wesentlich vereinfachten Herstellungsverfahren, wurden bereits im Zusammenhang mit der Energiespeicherzelle selbst erläutert. Insbesondere erlaubt dieses Verfahren eine wesentliche Vereinfachung der Anlagentechnik und eine damit verbundene Kosteneinsparung, da der Gehäusemantel auf der Wickelmaschine durch Fortführung des Wickelprozesses hergestellt werden kann. Eine separate Montagelinie zum Einbringen des Wickels in ein Gehäuse und zum Zusammenbau des Gehäuses kann entfallen.

Bei dem erfindungsgemäßen Verfahren sind zwei Varianten besonders bevorzugt. In der ersten Variante zeichnet sich das Verfahren durch das unmittelbar folgende zusätzliche Merkmal a. aus:
a. Zur Bildung des Gehäusemantels der Energiespeicherzelle wird der Gehäusemantel nach der Herstellung des Elektroden-Separator-Verbunds aus einem endständigen Abschnitt eines der Stromkollektoren gebildet.

Dieser endständige Abschnitt des bandförmigen Stromkollektors ist nicht mit Elektrodenmaterial beschichtet.

In der zweiten Variante zeichnet sich das Verfahren durch das unmittelbar folgende zusätzliche Merkmal b. aus:
b. Zur Bildung des Gehäusemantels der Energiespeicherzelle wird nach der Herstellung des Elektroden-Separator-Verbunds eine separate Mantelfolie, insbesondere eine separate Mantelmetallfolie, auf den Wickelmantel des Elektroden-Separator-Verbunds gewickelt.

Bezüglich weiterer Details des Verfahrens und der damit herstellbaren Energiespeicherzelle wird auf die obige Beschreibung bevorzugter Ausführungsformen der erfindungsgemäßen Energiespeicherzelle verwiesen.

In bevorzugten Ausführungsformen umfasst das erfindungsgemäße Verfahren das folgende zusätzliche Merkmal:
a. Nach der Wicklung von mindestens zwei Lagen der Folie, insbesondere der Metallfolie, zur Bildung des Gehäusemantels auf dem Wickelmantel des Elektroden-Separator-Verbunds wird der gebildete Gehäusemantel mit den randständigen Bereichen der Gehäusestirnseiten verschweißt, insbesondere mittels Laser verschweißt.

Durch die Verschweißung des durch die Metallfolienlagen gebildeten Gehäusemantels mit den randständigen Bereichen der Gehäusestirnseiten kann in besonders vorteilhafter Weise das flüssigkeitsdicht verschlossene Gehäuse ausgebildet werden. Derartige Verschweißungen sind im Bereich der Montage von Energiespeicherzellen weit verbreitet und können sehr genau und präzise und auch in automatisierter Weise durchgeführt werden.

Je nach konkreter Realisierung der Gehäusestirnseiten, die, wie oben beschrieben, insbesondere als metallische Scheibe oder Kappe oder in Form einer Kombination von Kappe mit Kontaktelement oder Scheibe mit Kontaktelement realisiert sein können, kann die Verschweißung in unterschiedlichen Bereichen ansetzen. Beispielsweise ist es möglich, dass die Metallfolienlagen, die den Gehäusemantel bilden, von außen über eine umlaufende Seitenwand einer die Gehäusestirnseite bildenden metallischen Kappe gewickelt werden. In diesem Fall kann über eine Laserverschweißung über die volle Materialstärke der Gehäusemantel an der Kappe befestigt und abgeschlossen werden.

In anderen Ausgestaltungen ist es möglich, dass die Wicklung der den Gehäusemantel bildenden Folienlagen, insbesondere der Metallfolienlagen, derart erfolgt, dass ein bündiger Abschluss des Randbereichs des spiralförmig gewickelten Folienbandes entsteht. Im Bereich dieses bündigen Abschlusses kann eine Verschweißung mit einer gehäusestirnseitigen Metallscheibe oder Metallkappe erfolgen, indem an der Nahtstelle beispielsweise eine Laserverschweißung vorgenommen wird.

In bevorzugten Ausgestaltungen des erfindungsgemäßen Verfahrens ist mindestens eines der folgenden zusätzlichen Merkmale a. und b. vorgesehen:
a. Die erste und/oder die zweite Gehäusestirnseite der Energiespeicherzelle werden von einer runden Metallscheibe oder einer metallischen Kappe, die einen runden Boden und eine umlaufende Seitenwand umfasst, gebildet, wobei nach der Wicklung des Elektroden-Separator-Verbunds die erste und/oder die zweite Wickelstirnseite mit der runden Metallscheibe oder der metallischen Kappe verschweißt werden, bevor der Gehäusemantel der Energiespeicherzelle gebildet wird;
b. Zur Ausbildung der ersten und/oder der zweiten Gehäusestirnseite der Energiespeicherzelle wird mindestens ein Kontaktelement, gegebenenfalls einschließlich eines an dem Kontaktelement fixierten separaten elektrischen Leiters, mit der ersten und/oder der zweiten Wickelstirnseite verschweißt, bevor der Gehäusemantel der Energiespeicherzelle gebildet wird, wobei vorzugsweise das Kontaktelement gegenüber der die erste Gehäusestirnseite bildenden Metallscheibe oder Kappe oder gegenüber der die zweite Gehäusestirnseite bildenden Metallscheibe oder Kappe elektrisch isoliert wird.

In bevorzugter Weise sind die vorgenannten Merkmale a. und b. in Kombination miteinander verwirklicht, wobei also auf einer Seite der Energiespeicherzelle die eine Wickelstirnseite vorzugsweise unmittelbar mit der die Gehäusestirnseite bildenden Metallscheibe oder Kappe kontaktiert ist. Auf der anderen Seite ist zusätzlich zu der die Gehäusestirnseite ausbildenden Metallscheibe oder Kappe ein Kontaktelement vorgesehen, an welches die entsprechende Wickelstirnseite angebunden ist.

Zur Vereinfachung der Kontaktierung der Wickelstirnseiten mit der Metallscheibe oder der metallischen Kappe oder dem Kontaktelement ist in bevorzugten Ausgestaltungen das folgende zusätzliche Merkmal vorgesehen:
a. Vor der Verschweißung der Wickelstirnseiten des Elektroden-Separator-Verbunds mit der runden, insbesondere kreisrunden, Metallscheibe und/oder mit der metallischen Kappe und/oder mit dem Kontaktelement wird der auf der jeweiligen Seite des Elektroden-Separator-Verbunds an der Wickelstirnseite gegebenenfalls austretende randseitige Bereich des Stromkollektors, der frei von Elektrodenmaterial ist, in Richtung einer zentralen Achse des Elektroden-Separator-Verbunds umgebogen.

Wie in Zusammenhang mit der erfindungsgemäßen Energiespeicherzelle weiter oben bereits erläutert wurde, kann es vorgesehen ein, dass die metallische Scheibe oder die metallische Kappe, die eine Gehäusestirnseite bilden, oder gegebenenfalls das Kontaktelement eine Öffnung oder Aussparung aufweisen. Diese Öffnung oder Aussparung kann bei der Montage der erfindungsgemäßen Energiespeicherzelle genutzt werden, um eine Elektrolytflüssigkeit in das Innere der Energiespeicherzelle einzubringen, um den Elektroden-Separator-Verbund damit zu tränken. Anschließend kann die Öffnung oder Aussparung verschlossen werden, beispielsweise mittels einem Blindniet.

Vorteilhafterweise wird weiterhin im Rahmen des erfindungsgemäßen Verfahrens zur Herstellung der Energiespeicherzelle wenigstens ein Isoliermittel verwendet, um einen Kurzschluss zwischen den Elektroden der Zelle zu vermeiden. Vorzugsweise wird dieses Isoliermittel zwischen einem Kontaktelement und der die jeweilige Gehäusestirnseite der Zelle bildenden metallischen Scheibe oder Kappe platziert.

Bezüglich weiterer Details zu diesem Isoliermittel wird auf die obige Beschreibung verwiesen. Insbesondere kann das Isoliermittel platziert werden, nachdem die Wickelstirnseiten mit den die Gehäusestirnseiten bildenden metallischen Scheiben oder Kappen oder gegebenenfalls mit einem Kontaktelement verbunden wurden. Erst danach erfolgt die Wicklung der Folienlagen zur Ausbildung des Gehäusemantels.

Beispielsweise eignet sich hierfür ein ringförmiges Isoliermittel oder ein Isolierband, das an der Kante des Wickels, die im Bereich der zu isolierenden Gehäusestirnseite liegt, angebracht wird.

In einer besonders bevorzugten Ausgestaltung des erfindungsgemäßen Verfahrens werden die Folienlagen, insbesondere die Metallfolienlagen, die den Gehäusemantel bilden, im Zuge des Verfahrens miteinander verklebt. Hierfür kann das Metallfolienband bzw. ein entsprechender Abschnitt des Metallfolienbandes, der für die Ausbildung des Gehäusemantels vorgesehen ist, vorab mit einer Klebeschicht versehen werden, die beispielsweise aufgesprüht oder aufgerakelt wird. Hierbei kann es sich um einen Flüssigkleber oder einen Schmelzkleber oder einen thermoplastischen Klebstoff handeln. Bei der Verwendung eines thermoplastischen Klebstoffs kann der Gehäusemantel insbesondere im Nachhinein versiegelt werden, indem der Klebstoff ausgehärtet wird. Auch bezüglich dieses Klebstoffs wird auf die obigen Ausführungen im Zusammenhang mit der erfindungsgemäßen Energiespeicherzelle verwiesen.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Zeichnungen zeigt:
- Figur 1: Längsschnitt durch eine erfindungsgemäße Energiespeicherzelle;
- Figur 2: Längsschnitt durch eine weitere Ausführungsform einer erfindungsgemäßen Energiespeicherzelle;
- Figur 3: Schematische Darstellung der Komponenten eines Elektroden-Separator-Verbunds;
- Figur 4: Schematische Darstellung als Aufsicht auf einen Elektroden-Separator-Verbunds mit erfindungsgemäßer Ausbildung des Gehäusemantels der Energiespeicherzelle; und
- Fig. 5: Schematische Längsschnittdarstellungen (A - C) zu weiteren Ausführungsformen einer erfindungsgemäßen Energiespeicherzelle.

### BESCHREIBUNG BEVORZUGTER AUSFÜHRUNGSBEISPIELE

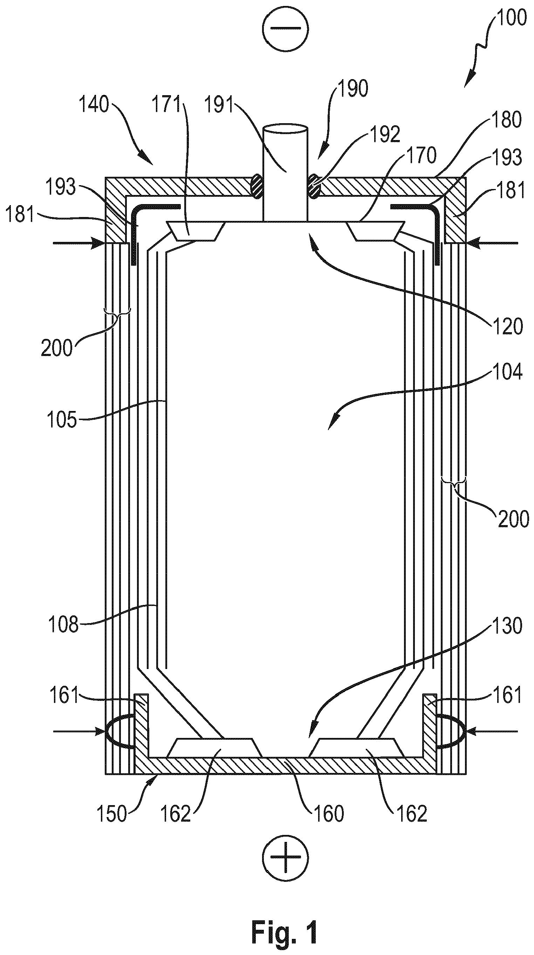

**Fig. 1** zeigt eine bevorzugte Ausführungsform einer erfindungsgemäßen Energiespeicherzelle 100. Im Zentrum der Zelle befindet sich ein Elektroden-Separator-Verbund 104, der aus einer Wicklung von Elektrodenbändern 105, 108 und bandförmigen Separatoren gebildet ist. Der Übersichtlichkeit halber sind hier die bandförmigen Separatoren nicht dargestellt.

Der Elektroden-Separator-Verbund 104 in Form eines Wickels ist axial innerhalb der Energiespeicherzelle 100 angeordnet. Der Elektroden-Separator-Verbund 104 umfasst eine erste Wickelstirnseite 120 und eine zweite Wickelstirnseite 130. Die erste Wickelstirnseite 120 befindet sich im Bereich der ersten Gehäusestirnseite 140. Die zweite Wickelstirnseite 130 befindet sich im Bereich der zweiten Gehäusestirnseite 150. Im Bereich der ersten Gehäusestirnseite 140 befindet sich beispielsweise der Minuspol der Zelle und im Bereich der zweiten Gehäusestirnseite 150 befindet sich entsprechend der Pluspol der Zelle.

Der Elektroden-Separator-Verbund 104 ist so ausgebildet, dass die Elektrodenbänder 105, 108 jeweils einen Längsrand aufweisen, der nicht mit Elektrodenmaterial beschichtet ist. Diese freien Längsränder der Elektrodenbänder 105, 108 ragen jeweils an den einander gegenüberliegenden Wickelstirnseiten 120, 130 aus dem Elektroden-Separator-Verbund 104 heraus. In dem hier beispielhaft illustrierten Ausführungsbeispiel ragt der unbeschichtete Rand des Anodenstromkollektors der negativen Elektrode 105 aus der ersten Wickelstirnseite 120 heraus. Der unbeschichtete Rand des Kathodenstromkollektors der positiven Elektroden 108 ragt aus der zweiten Wickelstirnseite 130 heraus. Über diese randseitigen Bereiche der Stromkollektoren erfolgt die elektrische Kontaktierung der Elektroden. Hierfür ist auf der zweiten Wickelstirnseite 130 eine metallische Kappe 160 vorgesehen, die mit einer umlaufenden Seitenwand 161 ausgestattet ist. Die metallische Kappe 160 ist mit mehreren Sicken 162 ausgestattet, die eine elektrische Kontaktierung mit dem Kathodenstromkollektor durch eine Verschweißung erleichtern. Die metallische Kappe 160 bildet zugleich die zweite Gehäusestirnseite 150 aus.

Im Bereich der ersten Wickelstirnseite 120 ist ein metallisches Kontaktelement 170 angeordnet, das in Form einer metallischen Scheibe mit mehreren Sicken 171 ausgebildet ist. Auch hier erfolgt eine elektrische Kontaktierung des von Elektrodenmaterial freien Randbereichs des Anodenstromkollektors über eine Verschweißung. Die erste Gehäusestirnseite 140 wird an dieser Seite von einer metallischen Kappe 180 mit einer umlaufenden Seitenwand 181 gebildet.

Im Zentrum der metallischen Kappe 180 befindet sich eine Poldurchführung 190, durch die ein Polbolzen 191 geführt ist, der gegenüber der metallischen Kappe 180 durch ein Isoliermittel 192, beispielsweise einen Isolierring, elektrisch isoliert ist. Der Polbolzen 191 steht mit dem Kontaktelement 170 in elektrischem Kontakt, sodass über den Polbolzen 191 das anodische Potential nach außen geführt wird.

Zwischen dem Kontaktelement 170 und der oberen Kante des Elektroden-Separator-Verbunds auf dieser Seite der Zelle einerseits und der metallischen Kappe 180 andererseits ist ein Isoliermittel 193, beispielsweise ein umlaufender Isolierring oder ein umlaufendes Isolierband, platziert.

Erfindungsgemäß wird der Gehäusemantel 200 der Energiespeicherzelle 100 in dieser Ausführungsform von einer, auf den Elektroden-Separator-Verbund 104 gewickelten mehrlagigen Metallfolie gebildet. In diesem Ausführungsbeispiel handelt es sich bei der den Gehäusemantel 200 bildenden Metallfolie um eine fortlaufende Wicklung des Metallfolienbandes, welches den Kathodenstromkollektor der positiven Elektrode 108 bildet und der nicht mit Elektrodenmaterial beschichtet ist.

Für die Herstellung des Gehäusemantels 200 wird zunächst der Elektroden-Separator-Verbund 104 in an sich bekannter Weise auf eine Wickelmaschine gewickelt. Dabei ist zwischen den Elektrodenbändern jeweils ein bandförmiger Separator vorgesehen. Von innen nach außen betrachtet läuft zunächst das eine Elektrodenband und gleichzeitig oder etwas später die Beschichtung des anderen Elektrodenbandes aus, wobei die bandförmigen Separatoren und der Stromkollektor des anderen Elektrodenbandes weitergeführt werden. Nach beispielsweise zwei weiteren Windungen enden auch die bandförmigen Separatoren und bilden damit den Abschluss der Wicklung des Elektroden-Separator-Verbunds. Der Stromkollektor des anderen Elektrodenbandes verbleibt jedoch noch.

Nun erfolgt die wickelstirnseitige Kontaktierung auf beiden Seiten des Elektroden-Separator-Verbunds mit einer metallischen Kappe oder einer metallischen Scheibe oder einem Kontaktelement. Hierfür wird zweckmäßigerweise das verbliebene Stromkollektorband etwas eingeschnitten, um beispielsweise die metallische Kappe 160 besser aufsetzen zu können. Zur Erhöhung der Passgenauigkeit beim Aufsetzen der Kappe 160 und des Kontaktelements 170 können vorab die freien Randbereiche der spiralförmig gewickelten Stromkollektoren, die aus dem Elektroden-Separator-Verbund an beiden Wickelstirnseiten herausragen, in Richtung der Mitte des Wickels umgebogen werden. Nach dem Anschweißen der Kappe 160 und des Kontaktelements 170 wird die Wicklung des verbliebenen Stromkollektorbandes weitergeführt, so dass diese Metallfolienlagen den Gehäusemantel 200 ausbilden.

In dem in Fig. 1 illustrierten Ausführungsbeispiel erfolgt die Wicklung des Kathodenstromkollektorbandes bzw. der den Gehäusemantel 200 bildenden Metallfolie derart, dass die Metallfolie auf die äußere Seite der umlaufenden Seitenwand 161 der Metallkappe 160 im Bereich der zweiten Gehäusestirnseite 150 aufliegt. Im Bereich der ersten Gehäusestirnseite 140 schließt der Rand der den Gehäusemantel 200 bildenden Metallfolie derart bündig ab, dass die Metallkappe 180 mit ihrer umlaufenden Seitenwand 181 auf diesem bündigen Abschluss des Randes der Metallfolie, die den Gehäusemantel 200 bildet, aufsitzen kann. Im Bereich der zweiten Gehäusestirnseite 150 werden die Metallfolienlagen, die den Gehäusemantel 200 bilden, durch Laserschweißen über die volle Materialstärke befestigt und abgedichtet. Im Bereich der ersten Gehäusestirnseite 140 erfolgt ein Laserverschweißen an der Nahtstelle zwischen dem bündigen Rand des Gehäusemantels 200 und dem Öffnungsrand der Seitenwand 181 der Kappe 180. Die Pfeile in Fig. 1 deuten die Verschweißungsansatzpunkte an.

In bevorzugten Ausgestaltungen der Energiespeicherzelle 100 kann die metallische Kappe 160 auf der zweiten Stirnseite 150 aus Aluminium oder einer Aluminiumlegierung gebildet sein. Auch der Kathodenstromkollektor ist vorzugsweise aus Aluminium oder einer Aluminiumlegierung gebildet. Das Kontaktelement 170 auf der ersten Stirnseite 140 ist vorzugsweise aus Kupfer oder einer Kupferlegierung gebildet. Auch der Anodenstromkollektor ist vorzugsweise aus Kupfer oder einer Kupferlegierung gebildet.

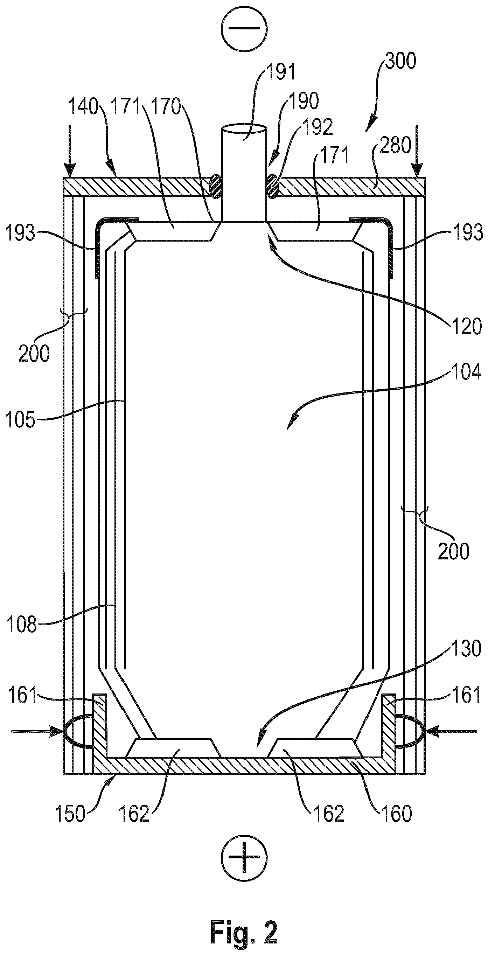

**Fig. 2** zeigt eine weitere Ausführungsform einer erfindungsgemäßen Energiespeicherzelle 300, die in weiten Teilen mit der Ausführungsform der Energiespeicherzelle 100 aus Fig. 1 vergleichbar ist. Die entsprechenden Elemente sind daher mit den gleichen Bezugszeichen versehen und es wird in diesem Zusammenhang auf die Beschreibung zu Fig. 1 verwiesen.

Im Unterschied zu der Ausführungsform aus Fig. 1 wird der Gehäusemantel 200 bei der Energiespeicherzelle 300 nicht von einem fortlaufenden Stromkollektorband, sondern von einer separaten Mantelmetallfolie gebildet, die auf den Elektroden-Separator-Verbund 104 gewickelt ist.

In der in Fig. 2 illustrierten Ausführungsform hat die den Gehäusemantel 200 bildende Mantelmetallfolie eine etwas größere Breite als die den Elektroden-Separator-Verbund 104 bildenden Elektrodenbänder und bandförmigen Separatoren. Der gewickelte Gehäusemantel 200 ragt daher im Bereich der ersten Gehäusestirnseite 140 etwas weiter über die erste Wickelstirnseite 120 mit dem daran angeschweißten Kontaktelement 170 hinaus, als bei der in Fig. 1 illustrierten Ausführungsform. In Anpassung daran wird die erste Stirnseite 140 der Energiespeicherzelle 300 von einer metallischen Scheibe 280 abgeschlossen. Zur Verbindung der Metallscheibe 280 mit dem Rand des gewickelten Gehäusemantels 200 kann von oben in den entsprechenden randseitigen Bereichen lasergeschweißt werden, wie es durch die Pfeile angedeutet ist.

Im Bereich der zweiten Gehäusestirnseite 150 erfolgt die Verbindung und Abdichtung der den Gehäusemantel 200 bildenden Metallfolienlagen durch ein Laserschweißen über die gesamte Materialstärke des Gehäusemantels 200 wie auch bei der Ausführungsform der Energiespeicherzelle 100 in Fig. 1.

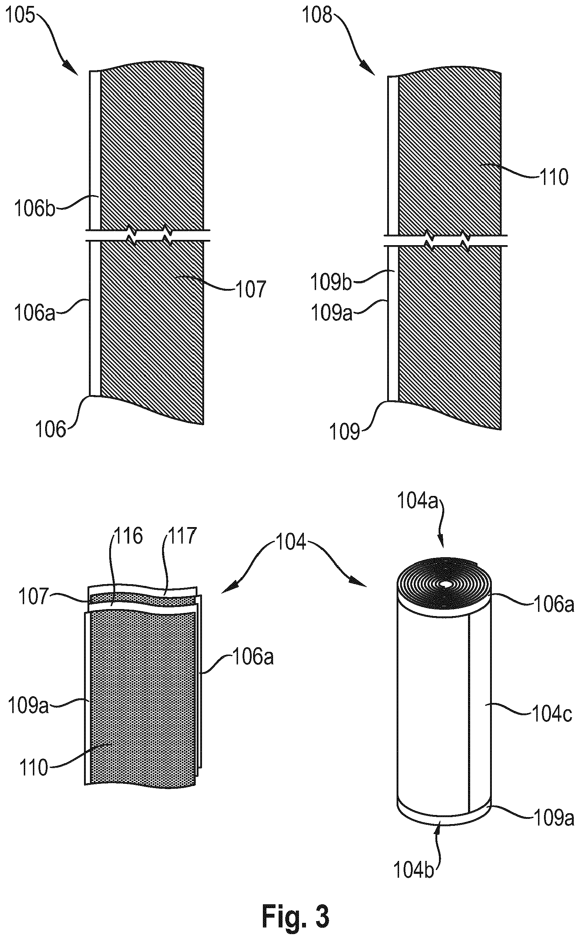

Ein bevorzugter Aufbau des Elektroden-Separator-Verbunds 104 wird anhand von **Fig. 3** veranschaulicht. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus beispielsweise Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist.

Weiterhin umfasst der Elektroden-Separator-Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich insbesondere um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 116 und 117 dargestellt, die im Wickel die Elektroden 105 und 108 voneinander trennen.

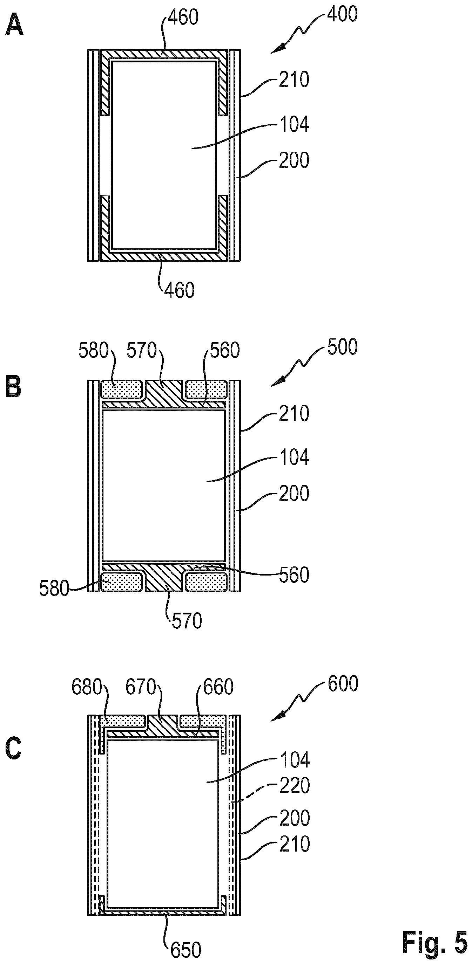

In der Darstellung rechts unten ist der Elektroden-Separator-Verbund 104 in gewickelter Form dargestellt, wie er in einer Energiespeicherzelle gemäß Fig. 1 oder Fig. 2 oder in einer Energiespeicherzelle gemäß den nachfolgend erläuterten Fig. 5A-C zum Einsatz kommen kann. Die aus den Stirnseiten 104a und 104b austretenden Elektrodenränder 106a und 109a sind gut zu erkennen. Der Wickelmantel 104c wird beispielsweise durch mehrere Wicklungen der bandförmigen Separatoren 116, 117 oder beispielsweise durch eine Kunststofffolie gebildet.

Ein solcher Elektroden-Separator-Verbund 104 in Form eines Wickels wird zweckmäßigerweise auf einer Wickelmaschine hergestellt. Zur Erleichterung der Kontaktierung mit den wickelstirnseitigen Bauteilen der Energiespeicherzelle werden die unbeschichteten Randbereiche der Elektrodenbänder 105, 108 vorzugsweise gezielt in Richtung des Wickelkerns gelegt.

Die metallische Scheibe oder die metallische Kappe 160 oder ein Kontaktelement 170, über die eine Kontaktierung der Elektroden 105, 108 erfolgt, werden vorzugsweise noch auf der Wickelmaschine auf den Wickelstirnseiten aufgeschweißt. Dies kann insbesondere im Bereich der vorteilhafterweise vorhandenen Sicken 162, 171 bei diesen Elementen, also bei der metallischen Scheibe oder der metallischen Kappe oder dem Kontaktelement, erfolgen.

Vorteilhafterweise weisen diese wickelstirnseitigen Bauteile eine zentrale Öffnung auf, die bei der Positionierung in der Wickelmaschine genutzt werden kann, um diese Elemente auf einer Wickelnadel zu führen. Diese zentrale Öffnung kann darüber hinaus auch zur Eindosierung eines Elektrolyten genutzt werden.

Im Fall von einer metallischen Kappe mit einer umlaufenden Seitenwand wird diese Kappe vorteilhafterweise so positioniert, dass die umlaufende Seitenwand in der Höhe knapp unterhalb der Breite des unbeschichteten Bereichs des jeweiligen Elektrodenbandes liegt. Der Durchmesser der umlaufenden Seitenwand ist dabei vergleichbar mit dem Durchmesser des Wickels. Die Höhe der Seitenwand ist vergleichbar mit dem unbeschichteten Bereich der Elektroden. Die Höhe der Seitenwand kann dabei beispielsweise zwischen 1,5 bis 2,5 mm liegen.

Die Sicken 162 der metallischen Kappe 160 oder die Sicken 171 des Kontaktelements 170 können beispielsweise sternförmig angeordnet sein, beispielsweise drei Sicken pro Kappe 160 oder pro Kontaktelement 170. In der Mitte der Kappe 160 oder des Kontaktelements 170 kann sich die Öffnung oder ein Loch befinden, das zum Durchführen einer Wickelnadel und damit zum Positionieren dieser Elemente auf den Wickelstirnseiten genutzt werden kann.

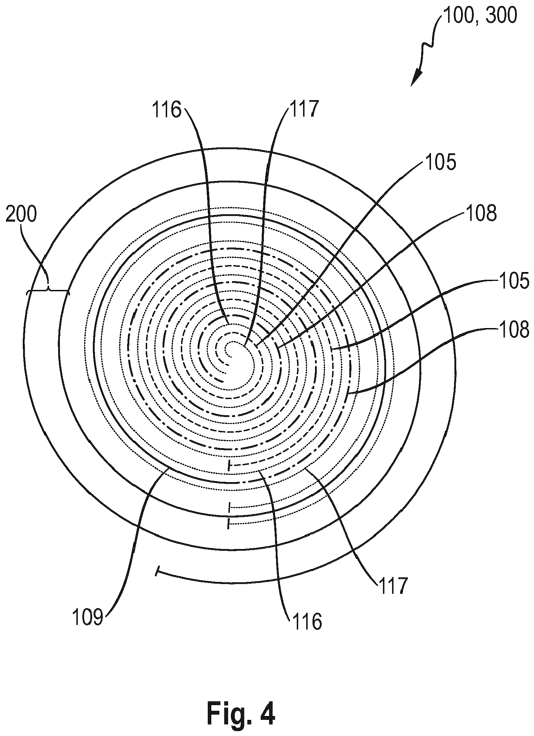

**Fig. 4** illustriert den Aufbau des Elektroden-Separator-Verbunds 104 mit dem darum gewickelten Gehäusemantel als Querschnittsansicht einer erfindungsgemäßen Energiespeicherzelle 100, 300. Im Zentrum des spiralförmigen Aufbaus startet die Wicklung mit einem ersten bandförmigen Separator 117, einem ersten Elektrodenband, beispielsweise dem negativen Elektrodenband 105, einem zweiten bandförmigen Separator 116 und dem zweiten Elektrodenband, beispielsweise dem positiven Elektrodenband 108. Nach einer Mehrzahl von Windungen endet zunächst das negative Elektrodenband 105. Etwa in dem gleichen Bereich endet die Elektrodenmaterialbeschichtung des positiven Elektrodenbandes 108, wobei der unbeschichtete Kathodenstromkollektor 109 und die bandförmigen Separatoren 116 und 117 für einige Windungen weitergeführt werden. Dann enden auch die bandförmigen Separatoren 116 und 117, so dass nur noch der Kathodenstromkollektor 109 für mehrere Windungen weitergeführt wird. Diese letzten Windungen allein des Kathodenstromkollektors 109 bilden den Gehäusemantel 200. In dieser Ausführungsform wird damit der Gehäusemantel 200 von einer Aluminiumfolie gebildet, sofern der Kathodenstromkollektor 109 eine Aluminiumfolie ist.

In analoger Weise kann der Anodenstromkollektor, der beispielsweise aus Kupferfolie besteht, zur Bildung des Gehäusemantels verwendet werden.

In anderen Ausführungsformen kann zur Ausbildung des Gehäusemantels 200 eine separate Folie eingesetzt werden, bei der es sich um eine Metallfolie oder auch um eine Kunststofffolie oder um eine Kombination von beidem handeln kann. Bei der Herstellung des Gehäusemantels 200 kann die Metallfolie also als unbeschichteter Stromkollektor direkt von den Elektrodencoils kommen oder extra innerhalb der Wickelmaschine zugeführt werden. Sie ist damit entweder direkt mit dem Elektrodenpotential verbunden oder bereits isoliert.

Die Folie zur Ausbildung des Gehäusemantels 200, insbesondere die Metallfolie zur Ausbildung des Gehäusemantels 200, kann mit gleicher oder auch mit ungleicher Dicke gewickelt werden, bis der maximale Außendurchmesser der Energiespeicherzelle erreicht ist. Diese Folie bildet dabei die eigentliche Mantelfläche des Zellgehäuses und ersetzt einen bei herkömmlichen Energiespeicherzellen vorgesehenen Gehäusebecher.

Vorteilhafterweise kann die Wickelmaschine die Lage der Überlappung der Elektrodenbänder und der bandförmigen Separatoren steuern. Damit ist es möglich, dass die Folie, insbesondere die Metallfolie, bei der Ausbildung des Gehäusemantels der Stirnseite weiter in die Mitte gerückt werden kann. So sind verschiedene Aufbauten des Gehäusemantels 200 möglich. Wenn der Gehäusemantel 200 beispielsweise ausschließlich aus einer Aluminiumfolie, also insbesondere durch die Weiterführung des Kathodenstromkollektors gebildet wird, kann das Folienmaterial zwischen der Anoden- und der Kathodenseite hin und her gefahren werden, so dass die endseitigen Bereiche des Gehäusemantels dünner ausgebildet werden. In entsprechender Weise kann der Gehäusemantel mit einer Kupferfolie gebildet werden, die insbesondere als ein fortlaufender Abschnitt des Anodenstromkollektors für die Wicklung des Gehäusemantels verwendet wird.

In anderen Ausführungsformen kann der Gehäusemantel aus verschiedenen Folien, beispielsweise aus verschiedenen Metallfolien, gebildet werden, beispielsweise aus einer Aluminiumfolie und einer Kupferfolie.

Die Stromkollektorfolien können gegebenenfalls in der Maschine oder in einer vorgelagerten Maschine in Form geschnitten werden, beispielsweise wenn eine breitere Folie an den Stirnseiten geschmälert werden muss. Ein Schneiden der Stromkollektorfolie oder einer anderen Folie, die den Gehäusemantel bildet, kann beispielsweise mittels Laser, einer Stanze oder mit einem Scherenschnitt erfolgen.

Bereits während des Wickelns der den Gehäusemantel bildenden Folie kann die erste oder gegebenenfalls alle Lagen mit den die Gehäusestirnseiten bildenden Elementen, also insbesondere einer metallischen Kappe oder einer metallischen Scheibe verschweißt werden.

Mit diesen Verfahren wird ein Wickelkorpus mit fester Mantelfläche und gehäusestirnseitigen Abschlüssen gebildet. Durch die gegebenenfalls vorhandenen Löcher oder Öffnungen in den gehäusestirnseitigen Elementen, die auch für die Wickelnadeln genutzt werden, kann Elektrolyt dosiert werden. Die Öffnungen oder Löcher können später zum Beispiel mit einem Blindniet verschlossen werden.

Mit besonderem Vorteil werden die Wickellagen, die den Gehäusemantel 200 bilden, verklebt, wodurch die Dichtigkeit des Gehäusemantels sichergestellt werden kann. Hierfür kann üblicher Klebstoff, z. B. Flüssigkleber, verwendet werden. Alternativ kann beispielsweise ein Kunststoff eingesiegelt werden. Für eine derartige Abdichtung können die entsprechenden Abschnitte der Folienbänder vorbeschichtet werden. Wenn der Gehäusemantel 200 beispielsweise von einem endständigen Abschnitt des Stromkollektors eines Elektrodenbandes gebildet wird, kann dieser endständige Abschnitt, beispielsweise die letzten Zentimeter des Stromkollektorbandes, direkt mit einem Thermoplasten beschichtet werden, so dass über diesen Thermoplasten später eine Versiegelung stattfinden kann.

Eine herkömmliche Energiespeicherzelle mit dem Formfaktor 21700 hat im Allgemeinen eine Gehäusewandstärke von 0,25 mm und ist beispielsweise aus vernickeltem Stahl gefertigt. Um einen Elektroden-Separator-Verbund bzw. den Elektrodenwickel in den Gehäusebecher einzubringen, ist ein Spielraum von ca. 0,2 mm im Durchmesser erforderlich, der für das Elektrodenmaterial ungenutzt bleibt. Bei der erfindungsgemäßen Energiespeicherzelle mit dem gewickelten Gehäusemantel kann dieser ungenutzte Raum vollständig genutzt werden. Es ist sogar möglich, dass zur Erreichung einer besonderen Stabilität des Gehäusemantels bei der erfindungsgemäßen Zelle die Wandstärke der den Gehäusemantel bildenden Folienlagen höher ist als die bei einer herkömmlichen Zelle übliche Wandstärke von 0,25 mm, ohne dass die Kapazität der resultierenden Zelle abnehmen würde. Beispielsweise kann die Wandstärke bei der erfindungsgemäßen Energiespeicherzelle bis zu 0,35 mm, beispielsweise gebildet durch 20 Lagen Aluminiumfolie, betragen, ohne dass der Durchmesser der Zelle im Vergleich mit einer herkömmlichen Energiespeicherzelle zunimmt und ohne dass die Kapazität geringer wäre.

Der Zusammenbau bzw. die Assemblierung einer herkömmlichen Energiespeicherzelle einschließlich der vorgeschalteten Herstellung des Elektroden-Separator-Verbunds und der Zellmontage unter Verwendung eines Gehäusebechers machen üblicherweise etwa einen Drittel der Gesamtkosten in der Produktion aus, wovon etwa ein Drittel auf die Herstellung des Elektroden-Separator-Verbunds entfällt. Da bei der Herstellung der erfindungsgemäßen Energiespeicherzelle die Linie für die Zellmontage entfällt, können damit die Produktionskosten erheblich gesenkt werden, auch wenn der Wickelprozess an die erfindungsgemäße Ausbildung des Gehäusemantels mittels einer Folie angepasst werden muss.

Alternativ zu der in den Fig. 1 und 2 illustrierten unmittelbaren Kontaktierung der Elektrodenbänder über die flächigen stirnseitigen Elemente der Energiespeicherzelle, also insbesondere direkt über eine gehäusestirnseitige metallische Scheibe oder Kappe oder direkt über ein flächiges Kontaktelement (Kontaktplattendesign), können auch metallische Kontaktstreifen für die Kontaktierung der Elektroden in an sich bekannter Weise verwendet werden. Besonders bevorzugt ist es dabei, wenn eine der Elektroden, beispielsweise die Kathode, über die flächige Kontaktierung des an der jeweiligen Wickelstirnseite austretenden spiralförmigen Randes des unbeschichteten Kathodenstromkollektors kontaktiert wird und die anodische Seite des Elektroden-Separator-Verbunds über einen metallischen Kontaktstreifen kontaktiert wird. Dieser Kontaktstreifen kann insbesondere senkrecht zur Laufrichtung des entsprechenden Elektrodenbandes auf einem freien Abschnitt des bandförmigen Stromkollektors, der nicht mit Elektrodenmaterial beladen ist, angeschweißt sein und an der entsprechenden Wickelstirnseite aus dem Wickel austreten und für die Kontaktierung verwendet werden.

Die Größe bzw. der Formfaktor der erfindungsgemäßen Energiespeicherzellen ist im Prinzip nicht beschränkt. Bevorzugt liegt die Höhe der als zylindrische Rundzelle ausgebildeten erfindungsgemäßen Energiespeicherzelle im Bereich von 50 mm bis 150 mm. Ihr Durchmesser liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen. Es können jedoch auch ohne weiteres beispielsweise kleinere zylindrische Rundzellen oder Knopfzellen gemäß dem erfindungsgemäßen Prinzip hergestellt werden.

Neben metallischen Folien können als Stromkollektoren prinzipiell auch andere bandförmige Substrate wie metallische oder metallisierte Vliese oder offenporige metallische Schäume oder Streckmetalle verwendet werden, wobei in diesem Fall die beschriebene bevorzugte Ausführungsform der Zelle, bei der der Gehäusemantel von einem endständigen Abschnitt einer der Stromkollektoren gebildet wird, im Allgemeinen nicht geeignet ist. Die Ausführungsform, bei der der Gehäusemantel von einer separaten Mantelfolie gebildet wird, kann aber auch ohne weiteres mit solchen anderen bandförmigen Substraten realisiert werden.

**Fig. 5** illustriert in den Teilfiguren A, B und C weitere mögliche Ausführungsformen 400, 500 und 600 einer erfindungsgemäßen Energiespeicherzelle. Die Energiespeicherzellen 400, 500, 600 umfassen jeweils einen wickelförmigen Elektroden-Separator-Verbund 104. Im Unterschied zu den anhand der Fig. 1 und 2 illustrierten Ausführungsformen einer erfindungsgemäßen Energiespeicherzelle ist bei den Energiespeicherzellen 400, 500 und 600 der Gehäusemantel 200 zumindest teilweise von einer Kunststofffolie gebildet.

Bei der in Fig. 5A gezeigten Energiespeicherzelle 400 wird die elektrische Anbindung der Elektroden des Elektroden-Separator-Verbunds 104 durch zwei metallische Kappen 460 realisiert, die sich in den jeweiligen stirnseitigen Bereichen der Energiespeicherzelle 400 befinden. Nach der Fertigstellung des wickelförmigen Elektroden-Separator-Verbunds 104 werden diese metallischen Kappen 460 mit den die jeweiligen Stirnseiten des Wickels bildenden Stromkollektorbändern der Elektroden elektrisch verbunden, insbesondere verschweißt. Anschließend werden mehrere Kunststofffolienlagen 210 über den äußeren Umfang des Elektroden-Separator-Verbunds 104 gewickelt, um so den Gehäusemantel 200 auszubilden. Eine Abdichtung des Gehäuses kann durch Verschweißung der Kunststofffolienlagen 210 mit den stirnseitigen Kappen 460 erfolgen.

Fig. 5B zeigt eine weitere Ausgestaltung einer erfindungsgemäßen Energiespeicherzelle 500. Hierbei sind die Stirnseiten des Elektroden-Separator-Verbunds 104 mit metallischen Bauteilen 560 elektrisch kontaktiert, die jeweils die Stirnseiten des Elektroden-Separator-Verbunds abdecken und gleichzeitig einen Pol-Pin 570 ausbilden. Der Gehäusemantel 200 wird von Kunststofffolienlagen 210 gebildet, die außen um den Elektroden-Separator-Verbund 104 herumgewickelt sind. Um den jeweiligen Pol-Pin 570 herum kann ein Kunststoffverguss 580 oder eine entsprechende Kunststofflochscheibe vorgesehen sein, die die Stirnseiten der Energiespeicherzelle 500 jeweils bündig nach außen abschließt.

Die in Fig. 5C illustrierte Ausführungsform einer Energiespeicherzelle 600 weist einen Gehäusemantel 200 auf, der im inneren Bereich von mehreren Lagen einer Metallfolie 220 und im äußeren Bereich von mehreren Lagen einer Kunststofffolie 210 gebildet ist. Zur elektrischen Kontaktierung der Elektroden ist auf der in dieser Darstellung unteren Stirnseite des Elektroden-Separator-Verbunds 104 eine metallische Kappe 650 und auf der oberen Stirnseite des Elektroden-Separator-Verbunds 104 ein metallisches Bauteil 660 mit einem angeformten Pol-Pin 670 vorgesehen. Ein umlaufendes Isolierungselement 680, insbesondere ein Kunststoffverguss, umgreift sowohl den Außenrand des metallischen Bauteils 660 als auch den oberen Rand des Elektroden-Separator-Verbunds im Bereich von dessen Stirnseite, um das metallische Bauteil 660 gegenüber den übrigen Komponenten der Energiespeicherzelle 600 elektrisch zu isolieren. Gleichzeitig schließt das Isolierungselement 680 die obere Stirnseite der Energiespeicherzelle 600 bündig ab.

## Patentansprüche

1. Energiespeicherzelle (100; 300; 400; 500; 600) mit einem zylindrischen, flüssigkeitsdicht verschlossenen Gehäuse mit einer ersten Gehäusestirnseite (140) und einer zweiten Gehäusestirnseite (150) und einem Gehäusemantel (200), mit den folgenden Merkmalen:
a. Die zylindrische Energiespeicherzelle (100; 300; 400; 500; 600) umfasst einen in dem Gehäuse angeordneten Elektroden-Separator-Verbund (104);
b. Der Elektroden-Separator-Verbund (104) liegt in Form eines aus Elektrodenbändern (105, 108) und mindestens einem bandförmigen Separator (116, 117) gebildeten zylindrischen Wickels vor, der eine erste und eine zweite endständige Wickelstirnseite (120, 130) und einen Wickelmantel aufweist;
c. Der Elektroden-Separator-Verbund (104) ist in dem Gehäuse axial angeordnet, so dass die erste Wickelstirnseite (120) in Richtung der ersten Gehäusestirnseite (140) und die zweite Wickelstirnseite (130) in Richtung der zweiten Gehäusestirnseite (150) weist;
**gekennzeichnet durch** das folgende Merkmal:
d. Der Gehäusemantel (200) der Energiespeicherzelle ist aus mindestens einer spiralförmig gewickelten Folie, bevorzugt einer spiralförmigen Metallfolie, gebildet und umfasst mindestens zwei Lagen der Folie, bevorzugt der Metallfolie.

2. Energiespeicherzelle nach Anspruch 1 mit mindestens einem der folgenden zusätzlichen Merkmale:
a. Der Elektroden-Separator-Verbund (104) umfasst ein Elektrodenband (108) mit positiver Polarität, das einen bandförmigen Kathodenstromkollektor (109) umfasst, der einen ersten Längsrand und einen dazu parallelen zweiten Längsrand aufweist und beidseitig mit einem positiven Elektrodenmaterial (110) beschichtet ist;
b. Der Elektroden-Separator-Verbund (104) umfasst ein Elektrodenband (105) mit negativer Polarität, das einen bandförmigen Anodenstromkollektor (106) umfasst, der einen ersten Längsrand und einen dazu parallelen zweiten Längsrand aufweist und beidseitig mit einem negativen Elektrodenmaterial (107) beschichtet ist;
c. Der mindestens eine bandförmige Separator (116, 117) isoliert die entgegengesetzt gepolten bandförmigen Elektrodenbänder (105, 108) elektrisch voneinander.

3. Energiespeicherzelle nach Anspruch 2 mit mindestens einem der folgenden zusätzlichen Merkmale:
a. Bei der spiralförmig gewickelten Folie, die den Gehäusemantel (200) der Energiespeicherzelle bildet, handelt es sich um einen spiralförmigen aufgewickelten endständigen Abschnitt des bandförmigen Kathodenstromkollektors (109), der nicht mit dem positiven Elektrodenmaterial beschichtet ist;
b. Bei der spiralförmig gewickelten Folie, die den Gehäusemantel (200) der Energiespeicherzelle bildet, handelt es sich um einen spiralförmigen aufgewickelten endständigen Abschnitt des bandförmigen Anodenstromkollektors (106), der nicht mit dem negativen Elektrodenmaterial beschichtet ist;
c. Der bandförmige Kathodenstromkollektor (109) und der bandförmige Anodenstromkollektor (106) haben über ihre gesamte Länge eine im Wesentlichen konstante Breite.

4. Energiespeicherzelle nach Anspruch 1 oder Anspruch 2 mit mindestens einem der folgenden zusätzlichen Merkmale:
a. Bei der spiralförmig gewickelten Folie, die den Gehäusemantel (200) der Energiespeicherzelle bildet, handelt es sich um ein spiralförmig aufgewickeltes Mantelfolienband, insbesondere um ein spiralförmig aufgewickeltes Mantelfolienband, das auf den Wickelmantel des Elektroden-Separator-Verbunds (104) gewickelt ist;
b. Der Wickelmantel des Elektroden-Separator-Verbunds (104) ist aus einem elektrisch isolierenden Material gebildet;
c. Das Mantelfolienband, insbesondere das Mantelmetallfolienband, hat über seine gesamte Länge eine im Wesentlichen konstante Breite;
d. Das Mantelfolienband, insbesondere das Mantelmetallfolienband, hat eine größere Breite als der bandförmige Kathodenstromkollektor (109) und/oder der bandförmige Anodenstromkollektor (106) des Elektroden-Separator-Verbunds (104).

5. Energiespeicherzelle nach einem der vorhergehenden Ansprüche mit einem der folgenden zusätzlichen Merkmale:
a. Die spiralförmig gewickelte Folie, die den Gehäusemantel (200) der Energiespeicherzelle bildet, besteht aus Aluminium oder aus einer Aluminiumlegierung;
b. Die spiralförmig gewickelte Folie, die den Gehäusemantel (200) der Energiespeicherzelle bildet, besteht aus Kupfer oder Nickel oder aus einer Kupferlegierung oder aus einer Nickellegierung.
c. Die spiralförmig gewickelte Folie, die den Gehäusemantel (200) der Energiespeicherzelle bildet, besteht aus Kunststoff.

6. Energiespeicherzelle nach einem der vorhergehenden Ansprüche mit dem folgenden zusätzlichen Merkmal:
a. Die aus der Folie, insbesondere der Metallfolie, gebildeten Lagen, die den Gehäusemantel (200) der Energiespeicherzelle bilden, sind durch eine Klebeschicht, die zwischen den Lagen angeordnet ist, miteinander verbunden.

7. Energiespeicherzelle nach einem der vorhergehenden Ansprüche mit mindestens einem der folgenden zusätzlichen Merkmale:
a. Mindestens einer der bandförmigen Stromkollektoren weist mindestens einen freien Abschnitt auf, der nicht mit dem Elektrodenmaterial beschichtet ist und an den ein metallischer Kontaktstreifen angeschweißt ist;
b. Der an den Stromkollektor geschweißte metallische Kontaktstreifen tritt aus einer der Wickelstirnseiten aus.

8. Energiespeicherzelle nach einem der vorhergehenden Ansprüche mit mindestens einem der folgenden zusätzlichen Merkmale:
a. Die erste Gehäusestirnseite (140) der Energiespeicherzelle wird von einer runden, insbesondere kreisrunden, Metallscheibe (280) oder einer metallischen Kappe (180), die einen runden, insbesondere kreisrunden, Boden und eine umlaufende Seitenwand (181) umfasst, gebildet;
b. Die die erste Gehäusestirnseite bildende Metallscheibe (280) oder Kappe (180) ist durch Verschweißung mit dem Gehäusemantel (200) verbunden;
c. Die zweite Gehäusestirnseite (150) der Energiespeicherzelle wird von einer runden, insbesondere kreisrunden, Metallscheibe oder einer metallischen Kappe (160), die einen runden, insbesondere kreisrunden, Boden und eine umlaufende Seitenwand (161) umfasst, gebildet;
d. Die die zweite Gehäusestirnseite bildende Metallscheibe oder Kappe (160) ist durch Verschweißung mit dem Gehäusemantel (200) verbunden.

9. Energiespeicherzelle nach Anspruch 8 in Kombination mit Anspruch 7 mit dem folgenden zusätzlichen Merkmal:
a. Der an den Stromkollektor geschweißte metallische Kontaktstreifen ist unmittelbar mit der die erste Gehäusestirnseite bildenden Metallscheibe oder Kappe oder mit der die zweite Gehäusestirnseite bildenden Metallscheibe oder Kappe verbunden, bevorzugt durch Verschweißung.

10. Energiespeicherzelle nach Anspruch 8 oder Anspruch 9 mit mindestens einem der folgenden zusätzlichen Merkmale:
a. Durch die erste und/oder durch die zweite Gehäusestirnseite (140, 150) ist ein elektrischer Kontaktpol (191) geführt, der gegenüber der jeweiligen Gehäusestirnseite elektrisch isoliert ist und der mit einem der bandförmigen Stromkollektoren (106; 109) unmittelbar oder über einen metallischen Leiter elektrisch verbunden ist;
b. Einer der bandförmigen Stromkollektoren (106; 109) ist unmittelbar oder über einen metallischen Leiter elektrisch mit der die erste Gehäusestirnseite (140) bildenden Metallscheibe oder Kappe oder mit der die zweite Gehäusestirnseite (150) bildenden Metallscheibe oder Kappe (160) elektrisch verbunden.

11. Energiespeicherzelle nach einem der Ansprüche 2 bis 10 mit mindestens einem der folgenden zusätzlichen Merkmale:
a. Der bandförmige Anodenstromkollektor (106) umfasst einen Hauptbereich, der mit einer Schicht aus dem negativen Elektrodenmaterial (107) beladen ist, sowie einen freien Randstreifen (106b), der sich entlang seines ersten Längsrands (106a) erstreckt und der nicht mit dem negativen Elektrodenmaterial beladen ist;
b. Der bandförmige Kathodenstromkollektor (109) umfasst einen Hauptbereich, der mit einer Schicht aus positivem Elektrodenmaterial (110) beladen ist, sowie einen freien Randstreifen (109b), der sich entlang seines ersten Längsrands (109a) erstreckt und der nicht mit dem positiven Elektrodenmaterial beladen ist;
c. Die Elektrodenbänder (105, 108) sind innerhalb des als Wickel ausgebildeten Elektroden-Separator-Verbunds (104) derart angeordnet, dass
- der erste Längsrand (106a) des Anodenstromkollektors oder der erste Längsrand (109a) des Kathodenstromkollektors aus einer der endständigen Wickelstirnseiten
oder
- dass der erste Längsrand (109a) des Kathodenstromkollektors aus der einen endständigen Wickelstirnseite und der erste Längsrand (106a) des Anodenstromkollektors aus der anderen endständigen Wickelstirnseite des Elektroden-Separator-Verbunds austritt.

12. Energiespeicherzelle nach Anspruch 11 in Kombination mit Anspruch 8 mit dem folgenden zusätzlichen Merkmal:
a. Der eine der bandförmigen Stromkollektoren (106; 109) ist unmittelbar mit der die erste Gehäusestirnseite (140) bildenden Metallscheibe oder Kappe oder mit der die zweite Gehäusestirnseite (150) bildenden Metallscheibe oder Kappe elektrisch verbunden, wobei der erste Längsrand des jeweiligen Stromkollektors unmittelbar auf der Metallscheibe oder dem Boden der Kappe aufsitzt und mit dieser oder diesem durch Verschweißung verbunden ist, bevorzugt über seine gesamte Länge.

13. Energiespeicherzelle nach Anspruch 11 oder Anspruch 12 mit mindestens einem der folgenden zusätzlichen Merkmale:
a. Der erste Längsrand (106a) des Anodenstromkollektors und/oder der erste Längsrand (109a) des Kathodenstromkollektors tritt aus einer der endständigen Wickelstirnseiten aus und weist einen spiralförmigen Verlauf auf;
b. Mindestens die äußere Windung des ersten Längsrands ist in Richtung einer zentralen Achse des Elektroden-Separator-Verbunds (104) umgebogen.

14. Energiespeicherzelle nach einem der Ansprüche 2 bis 13 in Kombination mit Anspruch 8 mit mindestens einem der folgenden zusätzlichen Merkmale:
a. Die Energiespeicherzelle umfasst mindestens ein Kontaktelement (170), gegebenenfalls einschließlich eines an dem Kontaktelement fixierten separaten elektrischen Leiters, das mit dem ersten Längsrand des Kathodenstromkollektors (109) oder des Anodenstromkollektors (106) durch Verschweißung verbunden ist, bevorzugt über dessen gesamte Länge, und über das dieser Stromkollektor elektrisch mit der die erste Gehäusestirnseite (140) bildenden Metallscheibe oder Kappe oder mit der die zweite Gehäusestirnseite bildenden Metallscheibe oder Kappe elektrisch verbunden ist;
b. Das Kontaktelement (170) sitzt flach auf dem ersten Längsrand des Kathodenstromkollektors oder des Anodenstromkollektors auf;
c. Das Kontaktelement umfasst ein erstes Element, das flach auf dem ersten Längsrand des aus der ersten oder der zweiten endständigen Stirnseite austretenden Stromkollektors aufsitzt und sich parallel zur jeweiligen Wickelstirnseite erstreckt, und umfasst ein zweites Element, das sich abgewinkelt an das erste Element anschließt und über den das erste Element elektrisch mit der die erste Gehäusestirnseite bildenden Metallscheibe oder Kappe oder mit der die zweite Gehäusestirnseite bildenden Metallscheibe oder Kappe verbunden ist;
d. Das Kontaktelement ist unmittelbar mit der die erste Gehäusestirnseite bildenden Metallscheibe oder Kappe oder mit der die zweite Gehäusestirnseite bildenden Metallscheibe oder Kappe verbunden, insbesondere durch Verschweißung;
e. Das Kontaktelement (170) steht unmittelbar oder über einen elektrischen Leiter mit einem durch die erste und/oder durch die zweite Gehäusestirnseite geführten elektrischen Kontaktpol (191) in Kontakt.

15. Verfahren zur Herstellung einer Energiespeicherzelle (100; 300) mit einem zylindrischen, flüssigkeitsdicht verschlossenen Gehäuse mit einer ersten Gehäusestirnseite (140) und einer zweiten Gehäusestirnseite (150) und einem Gehäusemantel (200) gemäß einem der vorhergehenden Ansprüche, umfassend die folgenden Schritte:
a. Es wird ein Elektroden-Separator-Verbund (104) in Form eines Wickels mit zwei endständigen Wickelstirnseiten und einem Wickelmantel auf einer Wickelmaschine hergestellt, wobei der Elektroden-Separator-Verbund aus Elektrodenbändern (105, 108) gebildet wird, zwischen denen mindestens ein bandförmiger Separator (116, 117) angeordnet wird, wobei vorzugsweise die Elektrodenbänder jeweils einen bandförmigen Stromkollektor umfassen, der mit Elektrodenmaterial beschichtet ist;
b. Der Gehäusemantel (200) wird durch Wicklung aus einer Folie, insbesondere aus einer Metallfolie, gebildet.
